(19) Europäisches Patentamt
European Patent Office
Office européen des brevets

(11) **EP 4 653 292 A1**

(12) **EUROPEAN PATENT APPLICATION**

(43) Date of publication:
26.11.2025 Bulletin 2025/48

(21) Application number: 25190423.1

(22) Date of filing: 02.06.2023

(51) International Patent Classification (IPC):
*B62D 15/02* (2006.01)     *B60W 30/10* (2006.01)

(52) Cooperative Patent Classification (CPC):
**B62D 15/025; B60W 30/10; B60W 50/10;**
**B60W 60/0053;** B60W 2556/50

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: 02.06.2022 US 202263348344 P
30.05.2023 US 202318325615

(62) Document number(s) of the earlier application(s) in
accordance with Art. 76 EPC:
**23732403.3 / 4 532 297**

(71) Applicant: **Qualcomm Auto Ltd.**
**Cambridge CB4 0WZ (GB)**

(72) Inventors:
• **VEEN, Jan**
**583 36 Linkoping (SE)**

• **REBER, Tanja Sibylle**
**583 36 Linkoping (SE)**
• **GAUDSZUN, Benjamin**
**583 36 Linkoping (SE)**
• **KAMAL, Ahmed Ehab Sadek Sayed**
**583 36 Linkoping (SE)**

(74) Representative: **Reddie & Grose LLP**
**The White Chapel Building**
**10 Whitechapel High Street**
**London E1 8QS (GB)**

Remarks:
This application was filed on 18.07.2025 as a
divisional application to the application mentioned
under INID code 62.

(54) **MANAGING AN INTEGRAL PART OF A CONTROLLER OF AN AUTOMATED VEHICLE**

(57) Disclosed are systems and techniques for controlling one or more operations of a vehicle. For example, according to some aspects, a process or method may include determining a manual interaction with the vehicle and determining, during the manual interaction with the vehicle, an error between a setpoint value of a parameter and a current value of the parameter. For example, according to some aspects, a process or method for controlling one or more operations of a vehicle may include receiving input data associated with a manual interaction with the vehicle; determining, while the manual interaction is active, a supplemental lookahead offset based on the manual interaction; and applying, while the manual interaction is active, the supplemental lookahead offset to a lookahead offset at an output of a controller configured to control at least one function of the vehicle.

**FIG. 1C**

**Description**

FIELD OF THE DISCLOSURE

The present disclosure generally relates to managing operations of a controller of a vehicle (e.g., a proportional, integral, derivative (PID) controller or any other controller that includes an integral control engine). For example, aspects of the present disclosure are related to managing an "integral" part (also referred to as an I-part, I-part parameter, or accumulation parameter) of an integral control engine of a controller.

BACKGROUND OF THE DISCLOSURE

An automated vehicle or partially-automated vehicle includes one or more automation capabilities that allow the vehicle to autonomously perform one or more functions without requiring the user interact with or control the vehicle. For example, an automated or partially-automated vehicle may include a control system that can steer the vehicle and avoid accidents while following a determined path to a destination without requiring a user to control the steering wheel of the vehicle. One example of a controller that can be used as the control system or as part of the control system is a proportional, integral, derivative (PID) controller.

SUMMARY

Disclosed are systems and techniques for managing an I-part (or I-part parameter or accumulation parameter) of an integral control engine of a controller. According to at least one example, a method is provided for controlling one or more operations of a vehicle. The method includes: determining a manual interaction with the vehicle; determining, during the manual interaction with the vehicle, an error between a setpoint value of a parameter and a current value of the parameter; and determining, based on the determined error, whether to accumulate values associated with the error for controlling at least one function of the vehicle.

In another example, an apparatus for controlling one or more operations of a vehicle is provided that includes at least one memory and at least one processor (e.g., implemented in circuitry) coupled to the at least one memory. The at least one processor is configured to: determine a manual interaction with the vehicle; determine, during the manual interaction with the vehicle, an error between a setpoint value of a parameter and a current value of the parameter; and determine, based on the determined error, whether to accumulate values associated with the error for controlling at least one function of the vehicle.

In another example, a non-transitory computer-readable medium is provided that has stored thereon instructions that, when executed by one or more processors, cause the one or more processors to: determine a manual interaction with the vehicle; determine, during the manual interaction with the vehicle, an error between a setpoint value of a parameter and a current value of the parameter; and determine, based on the determined error, whether to accumulate values associated with the error for controlling at least one function of the vehicle.

In another example, an apparatus for controlling one or more operations of a vehicle is provided. The apparatus includes: means for determining a manual interaction with the vehicle; means for determining, during the manual interaction with the vehicle, an error between a setpoint value of a parameter and a current value of the parameter; and means for determining, based on the determined error, whether to accumulate values associated with the error for controlling at least one function of the vehicle.

According to at least one example, a method is provided for controlling one or more operations of a vehicle. The method includes: receiving input data associated with a manual interaction with the vehicle; determining, while the manual interaction is active, a supplemental lookahead offset based on the manual interaction; and applying, while the manual interaction is active, the supplemental lookahead offset to a lookahead offset at an output of a controller configured to control at least one function of the vehicle.

In another example, an apparatus for controlling one or more operations of a vehicle is provided that includes a controller configured to control at least one function of the vehicle, at least one memory, and at least one processor (e.g., implemented in circuitry) coupled to the at least one memory. The at least one processor is configured to: receive input data associated with a manual interaction with the vehicle; determine, while the manual interaction is active, a supplemental lookahead offset based on the manual interaction; and apply, while the manual interaction is active, the supplemental lookahead offset to a lookahead offset at an output of the controller.

In another example, a non-transitory computer-readable medium is provided that has stored thereon instructions that, when executed by one or more processors, cause the one or more processors to: receive input data associated with a manual interaction with the vehicle; determine, while the manual interaction is active, a supplemental lookahead offset based on the manual interaction; and apply, while the manual interaction is active, the supplemental lookahead offset to a lookahead offset at an output of a controller configured to control at least one function of the vehicle.

In another example, an apparatus for controlling one or more operations of a vehicle is provided. The apparatus includes: means for receiving input data associated with a manual interaction with the vehicle; means for determining, while the manual interaction is active, a supplemental lookahead offset based on the manual interaction; and means for applying, while the manual interaction is active, the supplemental lookahead offset to a lookahead offset at an output of a controller configured to control at least one function of the vehicle.

In some aspects, one or more of the apparatuses described above is or is part of a vehicle (e.g., a computing device of a vehicle), a robotics device, an extended reality device (e.g., a virtual reality (VR) device, an augmented reality (AR) device, or a mixed reality (MR) device), mobile device (e.g., a mobile telephone or so-called "smart phone" or other mobile device), a wearable device, and/or other device with automation capabilities. In some aspects, the apparatus further includes a display for displaying one or more images, notifications, and/or other displayable data. In some aspects, the apparatus can include one or more sensors, such as one or more sensors that can be used for determining a location and/or pose of the apparatus, a state of the apparatuses, and/or for other purposes.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

BRIEF DESCRIPTION OF THE DRAWINGS

The accompanying drawings are presented to aid in the description of various aspects of the disclosure and are provided solely for illustration of the aspects and not limitation thereof.

FIG. 1A is a block diagram illustrating an example of a proportional, integral and derivative (PID) controller, in accordance with some examples;

FIG. 1B is a block diagram illustrating an example of a controller having an integral control engine, in accordance with some examples;

FIG. 1C is a block diagram illustrating an example of a controller with an integral control engine and a derivative control engine that is uncoupled from a local offset feedback data input to the integral control engine, in accordance with some examples;

FIG. 2 is a block diagram illustrating example components in an automatic driving application, in accordance with some examples;

FIG. 3 is a diagram illustrating an example of movement of a vehicle in which an integral control engine of a controller is not frozen based on manual interaction with the vehicle, in accordance with some examples;

FIG. 4 is a diagram illustrating an example of situations when an integral control engine of a controller is frozen or not frozen, in accordance with some examples;

FIG. 5 is a diagram of an integral control engine of a controller making adjustments at a certain time and under certain conditions, in accordance with some examples;

FIG. 6 is a diagram of an integral control engine of a controller being reset with respect to a lateral controller and under certain conditions, in accordance with some examples;

FIG. 7 is a flow diagram illustrating an example of a process for controlling one or more operations of a vehicle, in accordance with some examples;

FIG. 8 is a flow diagram illustrating another example of a process for controlling one or more operations of a vehicle, in accordance with some examples; and

FIG. 9 is a block diagram illustrating an example of a computing system, in accordance with some examples.

DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the application as set forth in the appended claims.

As previously noted, an automated vehicle or partially-automated vehicle includes one or more automation capabilities, which allow the vehicle to perform one or more automation functions or features (e.g., self-driving functions such as traffic assist for navigating traffic, lane keep assist (LKA), lane change assist, obstacle avoidance, etc.) without requiring user interaction or control of the vehicle. A controller of an automated vehicle may include an integrator or integral part that accumulates error (also referred to as a local offset) between a current setting (e.g., speed, route, etc.) and a setpoint that defines a desired setting. Various issues can be associated with such an integral part of a controller, such as with excessive accumulation of error and reset of the error, which are described in more detail below.

One example of a controller that can be used as the control system or as part of the control system is a proportional, integral, derivative (PID) controller. A PID controller may have different options for specific applications. For example, for an automated vehicle, a PID controller may have a setpoint that includes parameters such as a route or predetermined path of the vehicle (e.g., including multiple positions associated with the route or pre-determined path of the vehicle), a speed of the vehicle, and/or other parameters. In some cases, an automated vehicle may include longitudinal and lateral PID controllers or a single PID controller that controls longitudinal and lateral directions. Feedback may be provided with respect to the various parameters to determine whether there is an error (or local offset) relative to a respective setpoint of a particular parameter (e.g., speed, route, etc.), such that the parameter needs to be updated. In some cases, the error value may be provided to each of a proportional (P) control engine, an integral (I) control engine (also referred to as an integrator control engine), and a derivative (D) control engine of the PID controller. Each of these control engines may multiply the error value by a gain and perform an operation on the error data. For example, the integral control engine may integrate and thus accumulate the error over time and the derivative control engine may determine a derivative of the error value. The output of the proportional, integral, and derivative control engines may be summed together and provided to a vehicle control system which can adjust the parameter (e.g., speed, path, etc.) of the vehicle.

When using a controller with an integral component that accumulates error (e.g., the I part of the PID controller), various issues can occur as noted above. For instance, when a vehicle is operating autonomously, a driver may interact with the vehicle by manually steering, changing the speed of the vehicle, or performing another operation or function (referred to as a driver in the loop (DIL)). As noted above, the integral part of a controller (e.g., the I part of a PID controller) contains the accumulation of the error relative to a setpoint over time. When the driver interacts with the system (e.g., a steering wheel of the vehicle that is in communication with the controller), the controller is not fully in control of the vehicle any longer, causing the control loop to be broken. For example, in some cases, the driver intervention may cause an increase or decrease in the error (or local offset) or a change in a sign of the error from a set parameter (e.g., speed, path, etc.) of the controller, referred to herein as a setpoint. As used herein, an increase or decrease in error or local offset refers to an increase or decrease in an absolute error or absolute local offset value relative to the set parameter (or setpoint). For example, an increase in a positive error value of 10 refers to a value of 11 or greater, while an increase in a negative error value of -10 refers to a value of -11 or less. If the integral part of the controller continues to accumulate error during the driver intervention, the accumulated error will rise and may cause issues with operation of the vehicle, such as when a sign change in the error occurs after the driver intervention. For example, if the integral part continues to accumulate error during driver intervention with a steering wheel of the vehicle, the rise in the accumulated error (e.g., an increase in an absolute value of the accumulated error) may cause a dramatic change (or jerk) in the steering when an automation function or feature (e.g., traffic assist, LKA, etc.) takes over again from the driver.

Another issue can arise due to a reset of the integral part of the controller. For instance, when the driver performs a particular correction (e.g., by steering the vehicle away from a set path in order to correct the path), it may be beneficial to start from a previous integral value to allow the automation functions to take over quickly. One example of such a correction being performed is when a vehicle is driving along a curve in a road. If the integral part is reset to 0 (corresponding to no accumulation of error), it may take time to accumulate the error to build up the integral part of the controller, which can prevent the system from properly performing the one or more automation functions.

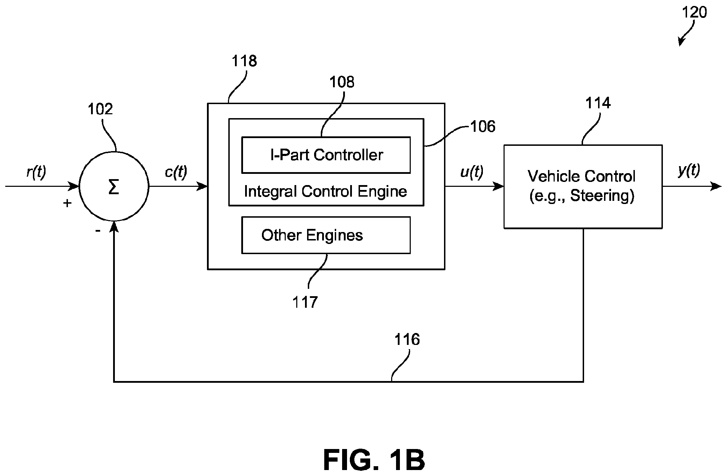

Systems, apparatuses, processes (also referred to as methods), and computer-readable media (collectively referred to as "systems and techniques") are described herein for providing a controller that includes an integral component (e.g., an integral control engine) for managing control (e.g., lateral control) of a vehicle. The controller can include any controller that includes an integral component (e.g., an integral control engine) for managing an integral part (I-part) value to improve performance of the vehicle. The I-part value is also referred to herein as an I-part parameter or accumulation parameter. The I-part parameter or accumulation parameter is associated with accumulation of error values by the integral component (e.g., the integral control engine) of a controller. An example of such a controller having an integral control engine is described with respect to FIG. 1B.

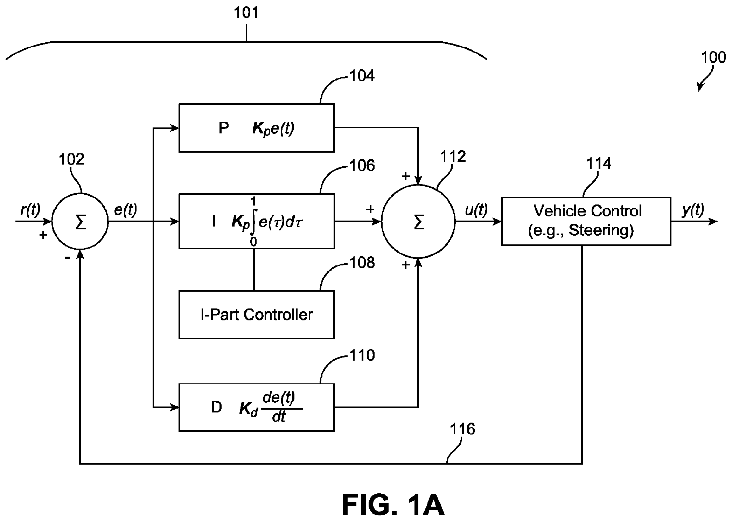

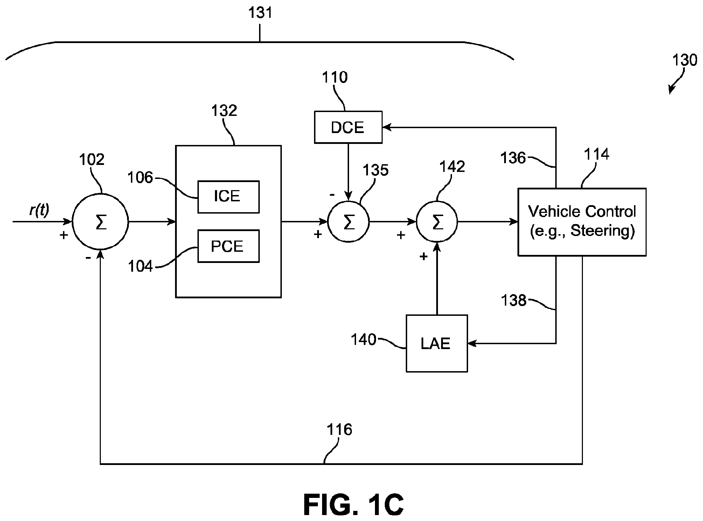

The controller may or may not have a proportional component (e.g., a proportional control engine) and/or a derivative component (e.g., a derivative control engine). In some aspects, the controller can include a PID controller (as described above) that includes an I-part controller for managing the I-part value of an integral control engine to improve performance of the control of the vehicle. An illustrative example of such a PID controller is discussed with reference to FIG. 1A. In some aspects, the controller may include an integral control engine that receives an error value (or local offset value) and an independent derivative control engine that does not receive the local offset value but receives a separate value from a vehicle/steering component. An example of a controller including such an independent derivative control engine is described with respect to FIG. 1C.

In some aspects, the vehicle may include a lookahead engine that may independently or in coordination with the controller receive a lookahead offset from the vehicle/steering component and compensate a feedforward path, such as by calculating an additional or supplemental lookahead offset (or feedforward) based on the driver input. The lookahead engine can also be referred to herein as a feedforward compensation engine. In some cases, a manual interaction or intervention with the vehicle by a driver (e.g., by controlling a steering wheel of the vehicle) can be used as a correction to the lookahead path (e.g., a point in the lookahead path), which results in additional data that can be used in the feedforward path (e.g., when steering torque is applied by the driver). Once the manual intervention is no longer active (e.g., the driver stops interacting with the vehicle, such as by no longer interacting with or controlling the steering wheel), the additional or supplemental lookahead offset can be reduced to zero (e.g., gradually reduced to zero) by the system looking ahead to the original path and thus applying the normal lookahead offset (e.g., the value of the lookahead offset prior to the additional or supplemental lookahead offset being applied). An example of a lookahead engine is shown also in FIG. 1C.

FIG. 1A is a diagram illustrating an example of a PID controller 101 of a control system 100 of a vehicle. The PID controller 101 is an example of a lateral controller. As shown, the PID controller 101 includes a proportional control engine 104, an integral control engine 106, and a derivative control engine 110. As noted above, aspects of the disclosure provide improvements to the integral control engine 106. The PID controller 101 may be one of several different types of controllers that generally includes an integral control engine 106 having an "I-part" (Integration-part). The I-part can be a parameter (referred to herein as an accumulation parameter or I-part parameter) which is an additive value used by the controller 101 for controlling the vehicle (e.g., by generating a steering request, such as a pinion angle request or steering torque request, to steer the vehicle).

A PID controller 101 is generally shown in FIG. 1A, but variations are discussed as well, such as are shown in FIG. 1B and FIG. 1C. The PID controller 101 is a modified PID controller relative to that discussed above in that, as shown in FIG. 1A, an I-part controller 108 is included that manages the I-part parameter (or accumulation parameter) according to various aspects described herein. In one illustrative example, for any of the controllers described herein (e.g., the controller 101 of FIG. 1A, the controller 118 described below with respect to FIG. 1B, the controller 131 described below with respect to FIG. 1C, etc.), a value for the I-part parameter (or accumulation parameter) may be determined as follows:

$$iPart_t = iPart_{t-1} + controllerError * iGain$$

Where $iPart_t$ is a new (current) value of the I-part parameter, $iPart_{t-1}$ is a value of the I-part parameter from a previous time step (e.g., the immediately prior time step or an earlier time step), $iGain$ is a tunable parameter that can be used to tune the controller, and $controllerError$ in one example is a lateral offset. As noted above, the I-part parameter is the integral part of the controller. Using the example formulation above, at each time step, the I-part parameter includes an accumulated value that results from a sum of the previous I-part parameter value and $controllerError * iGain$ values.

The PID controller 101 may correct for a parameter of the vehicle (e.g., a speed, route or pre-determined path, or other parameter of the vehicle), such as via lateral control. The following example focuses on the error in speed but the principles also apply to the lateral control of the vehicle in which there can be a negative offset (e.g., the vehicle is left of a requested or pre-determined path) or a positive offset (e.g., the vehicle is to the right of the requested or pre-determined path).

Using speed as an example of the parameter, the PID controller 101 can seek to match a speed y(t) of the vehicle to a setpoint speed r(t). The difference between the setpoint speed r(t) and the vehicle's current speed y(t) as determined by the summing component 102 is referred to as an error e(t). When the vehicle's speed is below the setpoint r(t), the error e(t) is positive, and when it is above the setpoint r(t), the error e(t) is negative: $error_{speed} = setpoint_{speed} - current_{speed}$. Similarly, using a pre-determined path or route of the vehicle, when a position of the vehicle is to a first side (e.g., to the right) of a setpoint r(t) position of the path, the error e(t) is positive, and when a position of the vehicle is to a second side (e.g., to the left) of the setpoint r(t) position of the path, the error e(t) is negative.

The proportional control engine 104 can receive the $error_{speed}$ as input and multiply the $error_{speed}$ by a scaling factor referred to as a proportional gain $K_P$ (denoted as $K_P * error_{speed}$). For example, the larger the error, the larger the control input to the controller 101 (e.g., in the case of cruise control, the larger the throttle input). In one example, the throttle can be considered as going from 0 to 100%. The PID controller 101 can map the throttle amount to the acceleration of the vehicle at 37 m/s$^2$, such that a throttle value of 100% maps to an acceleration of 37 m/s$^2$. If the setpoint speed r(t) is 100 km/h and the vehicle starts from 0 km/h, then the current error is 100 km/h. If the driver wants maximum acceleration with an error of 100 km/h, the controller 101 may set the proportional gain to be 1: Throttle = $K_P * error_{speed}$ = 1 * 100 = 100%.

As the error in speed decreases to a value of the setpoint r(t) (corresponding to an error of zero), the throttle will also decrease until the system reaches a throttle input of zero. However, the PID controller 101 may not be able to maintain the at the setpoint r(t) value in a real-world scenario without adjusting the throttle, such as due to friction, air resistance, and/or other factors that may reduce the speed of the vehicle. Such a scenario may lead to a steady-state bias in the PID controller 101.

The PID controller 101 may use the integral control engine 106 to maintain a target parameter (e.g., a setpoint value of the parameter), such as the target speed of the vehicle, given the steady-state bias noted above. For example, the integral control engine 106 may address any steady-state bias in the vehicle system by accumulating or integrating past errors (e.g., the various values of a particular parameter, such as speed, path or route, etc.) and storing a resulting accumulation value as an I-part representing the integration of the past errors in the parameter (e.g., speed, patch, etc.) relative to the setpoint value. In one illustrative example, the integral control engine 106 may sum up all of the speed error values (or a portion of the error values) that have been observed at each time step as follows: $total\ error_{speed}$ = $total\_error_{speed} + current\_error_{speed}$. The integral control engine 106 can scale the total error (e.g., a value of the I-part or accumulation parameter at a given point in time) with a gain, $K_I$. The integral control engine 106 may use the scaled error as a control input as follows: $K_I * total\ error_{speed} * dt$. Continuing with the example above, the speed of the vehicle may temporarily achieve the setpoint speed and may then go below the setpoint speed as the proportional input becomes zero, such as due to air resistance or other factors that slow the vehicle down. In such an example, if the integral control engine 106 sums the errors over time, the errors may be positive and continue to grow.

In some cases, the further the vehicle travels over time, the larger the integrator term, $total\_error_{speed}$, becomes. If the system chooses $K_I$ appropriately, the command for controlling the parameter value (e.g., the throttle command controlling speed, a steering request, such as a pinion angle request or steering torque request, controlling a path of travel of the vehicle, etc.) will be greater than zero even when the instantaneous error is zero. The PID controller 101 may sum (using summing component 112) the control terms from the proportional control engine 104, the integral control engine 106, and the derivative control engine 110 to obtain a total parameter value $u(t)$ (e.g., a total throttle input value, a total steering input value such as a pinion angle input value or steering torque request input value, etc.). The total parameter value $u(t)$ can be output to a vehicle control engine 114. Using the total parameter value $u(t)$ as input, the vehicle control engine 114 can output a parameter error 116 (e.g., a speed error, a steering error, such as a pinion angle error or steering torque error) relative to the setpoint value, which can be fed back to a summing component 102 to determine the error e(t). Based on the P and I terms, parameter may oscillate around the setpoint value instead of being biased below or above the setpoint value.

The derivative control engine 110 may be used to stabilize the parameter (e.g., speed, position on a path, etc.) to prevent overshooting and/or undershooting of the parameter relative to the setpoint r(t). For instance, the derivative control engine 110 may adjust control of the parameter (e.g., the throttle for controlling the speed, the steering value, such as pinion angle or steering torque, controlling the path of the vehicle, etc.) as the vehicle approaches the setpoint r(t)in order to avoid overshooting the setpoint r(t). The derivative control engine 110 may adjust the control of the parameter based on how quickly the vehicle is approaching the setpoint r(t), which can be represented as a rate of change of the error. Such a rate of change in error can be denoted as $K_p * (current\_error_{speed} - previous\_error_{speed})/(time_{current} - time_{previous}$, which can be simplified as follows (where d denotes change): $K_p * error_{speed} * d/dt$. If the error is decreasing (e.g., a decrease in an absolute value of the error), in which case the vehicle is approaching the setpoint r(t), the derivative term (D term) will be negative. In such a case, the derivative control engine 110 may reduce control of the parameter (e.g., reduce the total throttle, reduce the steering value such as pinion angle, etc.) since the parameter value is given by the sum of all the P, I, and D control terms. Using throttle and speed as an illustrative example, the following equation can be used to determine the throttle amount: Throttle = $K_p * error_{speed} + K_I * total error_{speed} * dt + K_d * error_{speed}) d/dt$.

While previous examples relate to controlling speed of the vehicle, the principles apply to lateral control of the vehicle which manages the lateral movement of the vehicle relative to a desired path (as defined by a setpoint r(t)). In such cases, the error (t) can relate to a local offset that can be positive (e.g., + I-part value) when the vehicle is to a first side (e.g., on a right side) of the requested path or negative (e.g., - I-part) when the vehicle is to a first side (e.g., on a left side) of the requested path. The integral part (I-part) controller 108 shown in FIG. 1A provides an improvement with respect to how the I-part parameter or error e(t) is handled in various scenarios. In some cases, depending on the input data, the error e(t) or some other value or parameter related to the integral control engine 106 can be reset, frozen at a certain value (in which case the integral control engine 106 will stop accumulating error values), set to zero or calculated to generate a substitute new value, or otherwise controlled. The I-part controller 108 may represent features built into the integral control engine 106.

While FIG. 1A is discussed with respect to a PID controller 101, aspects of the present disclosure relate to any controller having an integral control engine that maintains an I-part parameter or accumulation parameter. FIG. 1B illustrates a general controller 118 of a control system 120 of a vehicle. The controller 118 of FIG. 1B includes an integral control engine 106 and an I-part controller 108. While the controller 118 is shown to include an integral control engine 106, the controller 118 in general may have (or may not have) any other configuration or other engines 117 or components in addition to the integral control engine 106. The other engines 117 may include one or more processing engines (e.g., one or more central processing units (CPUs), one or more digital signal processors (DSPs), one or more graphics processing units (GPUs), one or more neural processing units (NPUs), etc.), one or more memory devices (e.g., one or more read-only memory (ROM), one or more random access memory (RAM), one or more cache memory, one or more buffers), and/or other engines. The controller 118 may or may not have a derivative control engine or a derivative control engine. A specific example of the controller 118 may include the PID controller 101 described in FIG. 1A or the controller 131 shown in FIG. 1C.

Aspect of this disclosure relate to the use of the I-part controller 108 of the integral control engine 106. As noted herein, the I-part controller 108 can manage (e.g., set to zero, freeze or not freeze, recalculate a substitution, ramp down, etc.) the I-part parameter (or accumulation parameter) in various different scenarios. For example, as shown in FIG. 1B, the controller 118 receives a local offset 116 (or error e(t)) from the vehicle control engine 114 and compares the local offset 116 relative to a setpoint $r(t)$ (e.g., using summing component 102). The output of the comparison (e.g., of the summing component 102) is provided to the I-part controller 108 of the integral control engine 106. Based on the result of the comparison of the local offset 116 relative to a setpoint $r(t)$, the I-part controller 108 can determine whether to continue accumulating local offset values of the I-part or accumulation parameter (e.g., not freezing), stop accumulating the local offset values (e.g., freezing), resetting the I-part parameter, ramping down the value of the I-part parameter, and/or otherwise maintain the I-part parameter.

FIG. 1C illustrates another example of a controller 131 of a control system 130 of a vehicle that includes an integral control engine (ICE) 106. In the example of FIG. 1C, a derivative control engine (DCE) 110 may receive a lateral acceleration value or other data (shown as output 136) from the vehicle control engine 114 instead of receiving the error 116 (as is the case in FIG. 1A). The error value 116 of FIG. 1C is provided to a controller 132 that includes at least the integral control engine (ICE) 106 and the proportional control engine (PCE) 104. In the example of FIG. 1C, an output of the derivative control engine 110 can be combined (e.g., adding or subtracting using a summing component 135) with the output of the integral control engine 106 and the output proportional control engine 104. The version of the controller 131 illustrated in FIG. 1C in which the derivative control engine 110 is decoupled from receiving the error e(t) can be considered a PID' controller or velocity lateral (Vlat) controller.

In one aspect, as shown in FIG. 1C, the controller 132 including the integral control engine 106 and the proportional control engine 104 receives the error 116 via a summing component 102. The derivative control engine 110 receives data (e.g., output 136) such as, for example, a yaw rate from the vehicle control engine 114. As noted above, the output of the derivative control engine 110 may be combined with the output of the controller 132 by the summing component 135. The output of the summing component 135 may include an initial steering request (e.g., a pinion angle request, a steering torque request, etc.). The output of the summing component 135 may be combined via a summing component 142 with an output of a lookahead engine (LAE) 140 (which can also be characterized as a feedforward path compensation engine) that receives lookahead offset data via a lookahead path 138 (also referred to as a feedforward path) from the vehicle control engine 114. The output of the summing component 142 may be a final steering request (e.g., a final pinion angle request, a final steering torque request, etc.) provided to the vehicle control engine 114, which may utilize an angle controller to adjust a steering of the vehicle.

While the example of FIG. 1C includes the controller 132 including the integral control engine 106 and the proportional control engine 104 and the derivative control engine 110 being decoupled or independent from the controller 132, the controller 131 may include other configurations of a controller that provides its output for the steering request (e.g., pinion angle request, steering torque request, etc.) to the summing component 142.

In some aspects, the lookahead engine 140 may compensate the lookahead path 138 by determining or calculating an additional lookahead offset (or feedforward) based on the driver input as indicated via the vehicle control engine 114. Manual interaction or intervention by a driver of the vehicle (e.g., based on the driver controlling the steering wheel of the vehicle) may be interpreted by the controller 131 as a correction to the lookahead path 138 (e.g., a correction to a particular point on the lookahead path 138), which results in an additional amount of data in the feedforward (e.g., only when steering torque is applied by the driver). Once the driver stops interacting with the vehicle (e.g., via the steering wheel), the controller 131 can reduce the additional offset to zero (e.g., by gradually reducing the additional offset to zero) by the lookahead engine 140 looking ahead to the original path and thus having the normal lookahead offset (e.g., the offset prior to the additional offset being added by summing component 142).

A system having such a lookahead engine 140 to provide feedforward compensation can stand as a separate aspect or example of this disclosure or can be used in combination with any aspects described herein (e.g., aspects related to the managing the I-part parameter described herein).

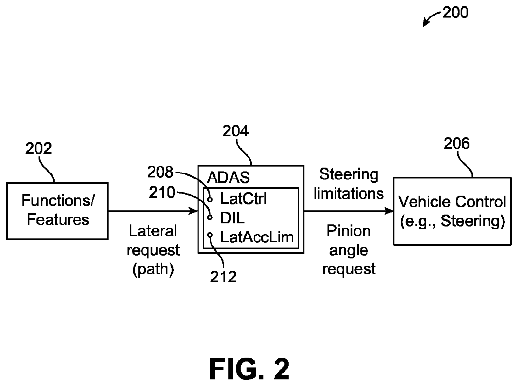

FIG. 2 is a block diagram 200 illustrating components of an automatic driving application of an automated vehicle. Features 202 (also referred to as functions) represent functions that can be performed by the vehicle, such as traffic assist for navigating traffic, lane keep assist (LKA) for maintaining the vehicle in a particular lane, lane change assist for changing lanes, obstacle avoidance for avoiding obstacles in a path of the vehicle, etc. The output from the features 202 may include an instruction or command related to the feature or function, such as a lateral request (e.g., a request to change lanes), a path request (e.g., a request to maintain a heading in a lane), etc. The output from the features 202 may be provided to an advanced driver assist system (ADAS) 204. The ADAS 204 can include a number of components, including a lateral control engine 208 that provides output for steering the vehicle along the path that is provided by the feature 202, a driver in the loop (DIL) engine 210, and a lateral acceleration limitation engine 212.

The lateral control engine 208 can output a steering request (e.g., pinion angle request, steering torque request, etc.) based on the requested path by one of the lateral features from the features 202. Various aspects of the lateral control engine 208 are provided herein. The lateral control engine 208 may include the controller 101 of FIG. 1A, the controller 118 of FIG. 1B, or the controller 131 of FIG. 1C. As noted above, the controller 131 of FIG. 1C may not be a conventional PID controller because the "D" Part (e.g., the derivative control engine 110) does not receive the error 116 that is received by the controller 132 including the proportional control engine 104 and the integral control engine 106.

In one aspect, the lateral control engine 208 may use a bicycle model or single-track model for conversion to a steering request (e.g., pinion angle request, steering torque request, etc.). In this model, the front wheel and the back wheel respectively represent the front wheels and back wheels of the vehicle. The bicycle model is a more simple model than a four-wheel model. A feedforward part calculates a steering value (e.g., a pinion angle, a steering torque value, etc.) that is needed to keep the vehicle on a constant curvature path (e.g., as described above with respect to FIG. 1C). In-curve logic of the lateral control engine 208 may provide (e.g., when a road with one or more curves is detected, such as using one or more sensors such as one or more cameras, depth sensors, etc.) a factor which is multiplied on one or more of a proportional value output by a proportional control engine, an integral value (of an I-part parameter or accumulation parameter) output by an integral control engine, and/or a derivative value output by a derivative control engine, as discussed previously. In one illustrative aspect, the lateral control engine 208 can be tuned for vehicles having a certain traffic assisted speed limit (e.g., a speed limit of 135 kph). Tuning of the lateral control engine 208 can be dependent on a feature specific behavior.

As noted above, outputs related to the features 202 (e.g., traffic assist, LKA, lane change assist, etc.) may be provided as input to the lateral control engine 208, which may include parameters related to a requested path of travel of the vehicle. The lateral control engine 208 can switch between different tuning sets. Examples of outputs from the lateral control engine 208 include a steering request (e.g., pinion angle request, steering torque request, etc.), a steering request rate limit (e.g., a pinion angle request rate limit, a steering torque request rate limit, etc.), among others, similar to that described above with respect to FIGs. 1A - 1C. The lateral control engine 208 outputs may be provided to a vehicle control engine 206 (similar to the vehicle control engine 114), which may include a steering torque manager that controls the torque related to steering of the vehicle. For example, the vehicle control engine 206 may use power steering unit software that can translate the steering request (e.g., pinion angle request, steering torque request, etc.) into a torque value. In one aspect, the lateral control engine 208 can be developed as an automotive safety integrity level (ASIL) quality management (QM) function.

The driver in the loop (DIL) engine 210 may ensure smooth interaction between input from the driver (e.g., steering wheel input from the driver) and actuation (e.g., steering actuation) by the lateral control engine 208 that controls lateral movement of the vehicle. For example, the driver in the loop engine 210 may be a hands-on-steering wheel feature running in parallel while a lateral feature (e.g., traffic assist, LKA, etc.) is active. In some cases, the driver in the loop engine 210 may not be active while the driver has his or her hands on the steering wheel, but is not actively steering. In case the driver has one or more hands on the steering wheel but the steering wheel torque is low enough to not overrule the lateral feature, the driver in the loop engine 210 may not interpret the input as a driver intervention and thus allow the feature to stay active. If the driver overrules the lateral feature by steering manually (e.g., the torque is high enough to overrule the lateral feature), the driver in the loop engine 210 may become active or turn on. In this case, the steering wheel can be controlled by the vehicle system, in which case the driver may feel a slight initial resistance in the steering wheel as an alert that the vehicle-controlled steering is contradicting the lateral feature. If the driver manually steers through this resistance, the driver in the loop engine 210 may reduce the steering wheel torque of the lateral feature, so that the driver is in control of the lateral movement of the vehicle. Such a driver in the loop feature allows the driver to steer without having to work against the lateral feature. When the driver reduces the manual steering or stops steering entirely, the lateral steering support of the feature may be gradually increased in until the lateral feature is completely back in control.

Tuning of the driver in the loop engine 210 is feature-dependent to allow a feature specific behavior. The system may determine (e.g., using artificial intelligence or machine learning) the identity of the driver and apply a profile that includes information associated with specific behavior of that driver). A steering wheel torque value is an example input of the driver in the loop engine 210. An example output of the driver in the loop engine 210 includes torque limits to communicate the allowed level of steering torque by the feature to the vehicle control engine 206. The driver in the loop engine 210 can perform the arbitration between the torque limits by the driver in the loop engine 210 itself and one or more torque limits output by the lateral acceleration limiter engine 212 (discussed below). In some cases, bandwidth scaling can be sent by the driver in the loop engine 210 to allow the vehicle control engine 206 to react on the driver in the loop torque limits resulting in a calmer behavior of the controller 118.

In some cases, the lateral acceleration limiter engine 212 can fulfil lateral acceleration limit requirements, such as lateral acceleration limit requirements from United Nations (UN) regulation No. 79 or any other government regulation or private parameter settings. Such regulations relate to provisions concerning the approval of vehicles with regard to steering equipment. UN regulation No. 79 is one example of a regulation that can be implemented in the ADAS 204. Other regulations or requirements can be utilized as well. The manufacturer of each respective vehicle can define the values of the maximum lateral acceleration limits. Different maximum lateral acceleration limits may be defined for different speed ranges. The lateral acceleration of a specific feature can be limited within a certain range and that range can be governed by stored data in the lateral acceleration limiter engine 212. In one aspect, while a traffic assist mode is active for a vehicle, the lateral acceleration limiter engine 212 can ensure that the lateral acceleration of the vehicle does not exceed the specified maximum lateral acceleration limit by more than 0.3 $m/s^2$.

In some cases, the lateral acceleration limiter engine 212 may activate in the absence of driver input to the steering control. For instance, while the traffic assist mode is not active, the lateral acceleration limiter engine 212 may not be active either. Illustrative examples of inputs to the lateral acceleration limiter engine 212 may include a speed of the vehicle, a yaw rate of the vehicle, and a steering torque that is currently applied by the lateral feature. The lateral acceleration limiter engine 212 may output torque limits to communicate the allowed level of steering torque by the lateral feature to the vehicle control engine 206. In some examples, the lateral acceleration limiter engine 212 can contain the basic torque limits for all lateral control modes. The allowed torque limits can be arbitrated by the driver in the loop engine 210 before the torque limits are output to the vehicle control engine 206.

The output of the ADAS 204 can be steering limitations and/or a steering request (e.g., pinion angle request, steering torque request, etc.). As an illustrative example of a steering request, a pinion angle refers to the angle of the differentials pinion in relation to the driveshaft. Setting the pinion angle can be a final step in driveline alignment. A goal of the pinion angle request or other steering request is to create a straight line from the back of the crankshaft through the transmission, driveshaft, and the pinion of the differential under load. Due to the tendency of the pinion to rise under load, some angle must be present at rest. In this example, there are adjustments to the pinion angle that occur via the vehicle control engine 206 based on the information received from the ADAS 204.

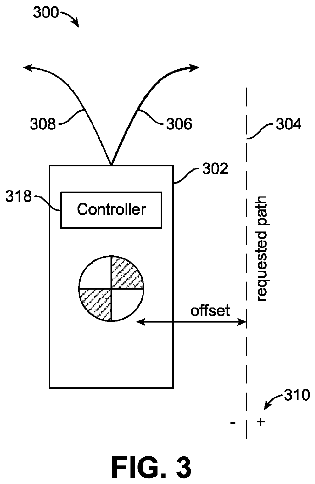

As noted above, aspects of the present disclosure relate to managing an I-part parameter (or accumulation parameter) of an I-part controller (e.g., the I-part controller 108 of the integral control engine 106 of FIG. 1A, FIG. 1B, FIG. 1C or other controller). In some cases, when a driver manually interacts with the vehicle (e.g., by interacting with or controlling a steering wheel of the vehicle), the I-part parameter (accumulation parameter) of the integral control engine 106 can stop accumulating error e(t) values (referred to herein as the I-part parameter being frozen). For example, as noted above, the integral control engine 106 of the controller 118 contains the accumulation of the error e(t) values, which may include local offset values (e.g., lateral offset values) related to a local offset (e.g., a lateral offset) of the vehicle over time. When the driver interacts with the vehicle, a lateral feature (e.g., traffic assist, LKA, etc.) is no longer fully in control and the control loop is broken. For example, the error e(t) or the local offset 116 may, during a driver interaction, change from a positive offset to a negative offset (see, e.g., as shown by the signs of the offset 310 in FIG. 3), but the I-part value may freeze during the driver interaction and thus not be correlated with the local offset or error value (e.g., the error 116). The I-part parameter may be frozen because, if the integral control engine 106 continues accumulate the error during the driver intervention, the accumulated error will rise and potentially cause a jerk in the steering experience for the driver when the controller (e.g., controller 101, controller 118, or controller 131) takes over control of the vehicle from the driver.

In some cases, if a driver manually interacts or controls the vehicle which causes a sign change in the I-part parameter to occur, and the I-part gets frozen, the I-part parameter can dominate the data used by the controller. In such cases, if under automated control of the vehicle another sign change in the I-part parameter occurs, the steering request (e.g., pinion angle request, steering torque request, etc.) output from the controller may not follow the sign change of the error/local offset and the steering of the vehicle may thus not be fully accurate. Such an issue may be attributable to the freezing of the I-part parameter during the user manual interaction with the vehicle and then over time the dominance of the I-part parameter in the controller. Aspects described herein provide techniques for maintaining the I-part parameter or error e(t) being accumulated by the integral control engine 106 based on certain events or situations.

In some examples, when the driver performs a small correction (e.g., a correction that does not change the vehicle path by a large amount, such as when driving around a curve), it may be beneficial to allow the controller take over (e.g., after the driver interaction) from a previous I-part parameter value (e.g., a previously accumulated error value) to allow a particular lateral feature (e.g., traffic assist etc.) to resume operation quickly and smoothly. In such examples, the control system may not reset the value of the integral control engine 106. For instance, with a reset of the accumulated error of the I-part parameter to zero, it can take a certain period of time for the integral control engine 106 to accumulate the I-part parameter value. Such a period of time may cause a delay in the system response with a corresponding performance loss. Aspects of the present disclosure relate to determining whether to reset (e.g., reset or not reset) the I-part parameter value (relating to the accumulation of error) to zero and/or taking another action, such as freezing the I-part parameter, determining or calculating a new I-part parameter value, and/or other actions.

FIG. 3 illustrates a diagram of a scenario 300 in which an integral control engine of a controller system determines not to freeze an I-part parameter value (e.g., the integral control engine continues to accumulate error values) based on manual interaction with a vehicle 302, such as when a driver interacts or interferes with the vehicle 302 (e.g., driver in the loop or DIL) such that automatic control of the vehicle is stopped. The vehicle 302 includes a controller 318 which can be active for controlling movement of the vehicle 302. The controller can include the controller 101 of FIG. 1A, the controller 118 of FIG. 1B, the controller 131 of FIG. 1C, or other controller that include an integral control engine with an I-part controller.

As shown in FIG. 3, the vehicle 302 is moving at a certain offset from a requested path 304. As noted above, due to the freezing of the I-part parameter in the integral control engine 106 upon driver intervention when the controller 318 is active, the steering angle (e.g., pinion angle, steering torque angle, etc.) may become "stuck" and does not react to a later sign change in the local offset 310. In some aspects, the controller 318 (e.g., the I-part controller 108 of the integral control engine 106) may determine whether to continue accumulating error values for the I-part parameter (and thus not freeze the I-part parameter) or whether to freeze the I-part parameter based on whether there is manual interaction with the vehicle 302 and whether the error e(t) is decreasing (e.g., an absolute value of the error e(t) is decreasing). For illustrative purposes, offsets 310 when the vehicle 302 is to the left of the requested path 304 are represented as negative offsets and offsets 310 when the vehicle 302 is to the right of the requested path 304 are represented as positive. In one illustrative example, if the vehicle 302 is moving laterally closer to the requested path 304 (represented as line 306), the local offset 310 (or error) is decreasing (e.g., an absolute value of the local offset 310 is decreasing). For instance, a difference between a first value of the error and a first setpoint value may be determined at a first point and then compared to a difference between a second value of the error and a second setpoint value at a second point, and if the differences are decreasing (e.g., the difference at the first point is greater than the difference at the second point), then the vehicle is moving closer to the requested path. In another illustrative example, if the vehicle 302 is moving laterally away from the requested path 304 (represented as line 308), the local offset 310 (or error) is increasing (e.g., an absolute value of the local offset 310 is increasing). For instance, a difference between a first value of the error and a first setpoint value may be determined at a first point and then compared to a difference between a second value of the error and a second setpoint value at a second point, and if the differences are increasing (e.g., the difference at the first point is less than the difference at the second point), then the vehicle is moving away from the requested path.

In one example, the controller 318 (e.g., the I-part controller 108 of the integral control engine 106) may determine that there is manual interaction with the vehicle 302 (e.g., that the driver is interfering or interacting with a steering wheel of the vehicle 302) and that the error e(t) or the local offset shown in FIG. 3 is decreasing (e.g., an absolute value of the local offset 310 is decreasing), which is represented as line 306 in FIG. 3). Upon determining the manual interaction with the vehicle 302 and that the error e(t) is decreasing, the controller 318 (e.g., the integral control engine 106) may determine to continue accumulating error values for the I-part parameter (and thus does not freeze the I-part parameter). In another example, the controller 318 can determine that there is manual interaction with the vehicle 302 (e.g., the driver is interfering or interacting with the vehicle 302) and that the offset or error is increasing (represented as line 308). Based on determining the manual interaction with the vehicle 302 and the increase in error, the controller 318 can determine to stop accumulation of the error values (and thus freeze the I-part parameter). In one illustrative example, a first difference between a subsequent first value of the error and the first setpoint value at a first point may be greater than a second difference between at least one prior second value of the error and the second setpoint value may be determined and based on this, a determination to stop the accumulation of error values may be made. As another illustrative example, a first difference between a subsequent first value of the error and the first setpoint value at a first point may be lesser than a second difference between at least one prior second value of the error and the second setpoint value may be determined and based on this, a determination to accumulate error values may be made. The freezing of the error value can occur before or after a sign change in the local offset.

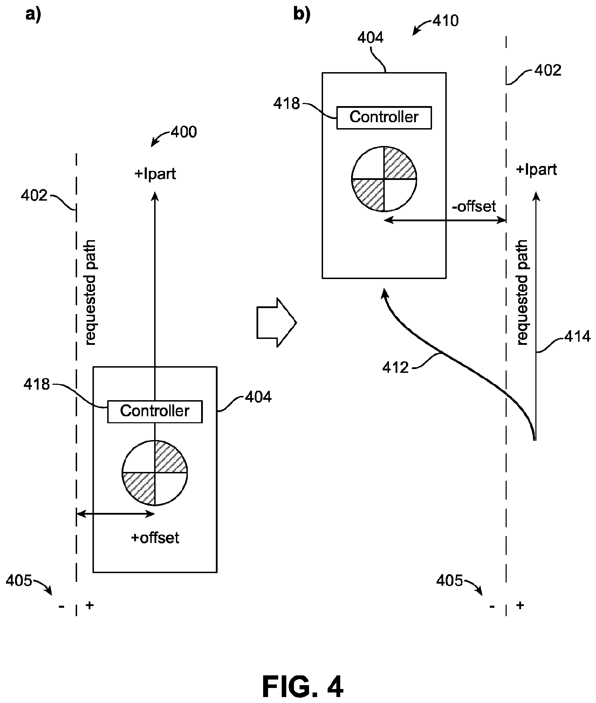

FIG. 4 is a diagram illustrating an example of a sign of the error or local offset changing to a different sign as compared to a sign of an I-part parameter 414 as a vehicle 404 transitions from a scenario 400 to a scenario 410. In the scenario 400, the vehicle 404 is moving with a small positive offset along a requested path 402. The vehicle 404 has a controller 418 operating to control movement of the vehicle 404. The controller 418 can include the controller 101 of FIG. 1A, the controller 118 of FIG. 1B, the controller 131 of FIG. 1C, or other controller that include an integral control engine with an I-part controller. Note that the offset 405 is positive when the vehicle 404 is on the right side of the requested path 402 and is negative when the vehicle 404 is on the left side of the requested path 402. In one aspect, the I-part parameter or error value is positive given the position of the vehicle 404 in scenario 400. For example, if the vehicle 404 were to move to the left of the requested path 402 (e.g., as shown in scenario 410), then the error or offset would change sign from positive to negative 405 (while the I-part parameter, corresponding to an accumulation of error values, remains a positive value).

In scenario 410, the vehicle 404 has moved along a path 412 to the left of the requested path 402 such that the error or offset has become negative. However, the I-part or error value in the integral control engine 106 remains positive, as noted above. In one aspect, the controller 418 can determine whether to continue accumulated error or offset values for the I-part parameter 414 based on whether there is manual interaction with the vehicle 404 and whether the error or local offset changes to a different sign as compared to the I-part parameter 414. For example, the controller 418 (e.g., the I-part controller 108 of the integral control engine 106) may continue to accumulate error values for the I-part parameter 414 (e.g., not freezing the I-part parameter 414) in the integral control engine 106 based on determining that there is manual interaction with the vehicle 404 (e.g., based on the driver interfering or interacting with a steering wheel of the vehicle 404) and that the error or local offset changes to a different sign (e.g., from positive (+) to negative (-)) as compared to the I-part parameter 414. In some cases, the controller 418 may freeze the I-part parameter (and thus stop accumulating error or offset values) when the error or local offset has the same sign as the I-part parameter. For instance, upon determining that there is manual interaction with the vehicle (e.g., the driver interferes or interacts with the steering wheel of the vehicle) and the error or local offset has the same sign as the I-part parameter, the controller 118 may stop accumulating error or offset values (e.g., until a later event is detected, such as the error or local offset changing to a different sign as compared to the I-part parameter 414, detection of the driver stopping interaction with the vehicle, etc.).

In some cases, the examples of FIG. 3 and FIG. 4 can be used independently or in combination. For example, in some cases, a controller of a vehicle can take into account whether the error or offset is decreasing or increasing and whether the error or local offset changes to a different sign as compared to the I-part parameter when determining whether to continue accumulation of error values for the I-part parameter (e.g., not freezing the I-part parameter) or to stop accumulation of the error values for the I-part parameter (e.g., freezing the I-part parameter).

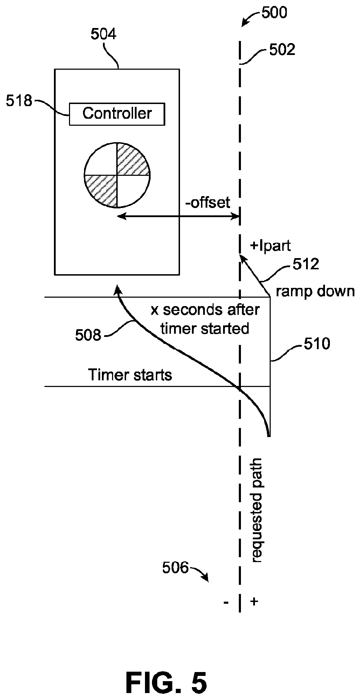

FIG. 5 is a diagram illustrating an example of a scenario 500 that includes a vehicle 504 includes a controller 518 to guide the vehicle along a requested path 502. The controller 518 can include the controller 101 of FIG. 1A, the controller 118 of FIG. 1B, the controller 131 of FIG. 1C, or other controller that include an integral control engine with an I-part controller. When the driver interacts with the vehicle 504 in the manner shown or under an automated driving condition, the vehicle can pass from a positive local offset 506 to a negative local offset 506. In this example, the I-part or error value of the integral control engine 106 is positive as well. As the vehicle 504 moves laterally to the left 508, the offset 506 changes from positive (+) to negative (-). The controller 518 can start a timer when the path of the vehicle 504 passes the requested path 502, as shown in FIG. 5. For example, the timer starts at the transition of the local offset 506 from positive (+) to negative (-) (or, in other examples, before or after this transition). The timer can be set to a certain period of time (e.g., x seconds, such as 2 seconds). In some cases, the controller 518 can maintain 510 the error or offset 506 for the period of time and then reduce 512 the error or offset 506 (e.g., at a certain rate or over a period of time) to zero or some other value which can be positive or negative.

In some aspects, the reduction 512 of the error or offset 506 can occur if the error or offset 506 still has a different sign relative to when the driver took over steering or relative to some other parameter under an automated driving condition. At the point of x seconds after the start of the timer, the offset 506 is negative where it was originally positive. However, in the scenario 500, rather than allowing the error or offset 506 to turn negative, the error or offset 506 is maintained as positive 510 (the same sign as the I-part parameter) and then reduced 512 as managed by the controller 518.

As noted above, the error or offset 506 may be reduced at a certain rate. In one aspect, the reduction 512 of the error or offset 506 may be performed based on a size of the I-part parameter (e.g., the size of the accumulated error). For example, if the I-part parameter value is relatively small (e.g., a value of 0.1, 0.2, or other value), the ramp down 512 can have a certain rate that can be established by the controller 518 (e.g., a rate of 0.25 meters/second (m/s) or some other rate). If the I-part is high (e.g., a value of 0.5, 0.6, or other value), the reduction 512 in the error or offset 506 can be established by the controller 518 to be a different value. In some cases, the length of the timer (e.g., the "x" value) may be set based on the value of the I-part parameter and whether the I-part parameter is high or low or based on some other data. The various aspects discussed above with respect to FIGs. 3, 4, and 5 can be performed independently or in combination with any of the concepts discussed herein.

The scenario 500 in FIG. 5 may occur during both driver interactions and automated driving (e.g., the decision to start the timer may be unrelated to whether manual interaction with the vehicle is occurring).

In some aspects, a controller (e.g., controller 101, controller 118, controller 131, controller 318, controller 418, controller 518, or other controller with an integral control engine) can implement an intelligent anti-windup approach. In such aspects, the I-part parameter (or accumulation parameter) may be limited to a threshold value (referred to as a limiting value). For example, the limiting value of the I-part parameter may be dependent on one or more of a time of intervention by the driver, a road curvature, a steering wheel angle, a steering request (e.g., pinion angle request, steering torque request, etc.), a steering impulse, a local offset, a yaw rate, data of the surroundings of the vehicle, map data, a heading of the vehicle, a feature steer torque, a driver steer torque, a lateral acceleration of the vehicle, any combination thereof, and/or other factors. The controller may limit the I-part parameter such that it does not exceed the limiting value based on one or more of these parameters.

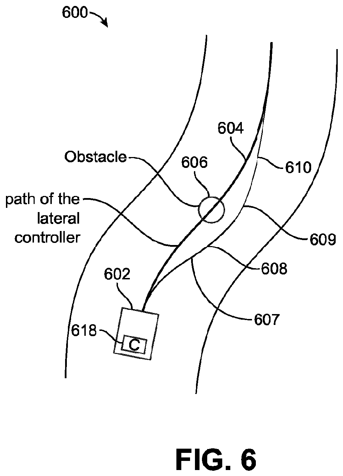

FIG. 6 illustrates another scenario 600 in which a vehicle 602 has a controller 618 and is driving along a requested path 604 of the controller 618. The controller 618 can include the controller 101 of FIG. 1A, the controller 118 of FIG. 1B, the controller 131 of FIG. 1C, or other controller that include an integral control engine with an I-part controller. As shown in the scenario 600, an obstacle 606 may be in the path 604 of the vehicle 602. At a first portion 607 of the path 604, a driver interaction with the vehicle 602 (e.g., with a steering wheel of the vehicle 602) causes the vehicle 602 to move away from the obstacle 606. After the vehicle passes the obstacle 606 based on the driver interaction, the driver may stop interacting with the steering wheel (e.g., by letting go of or releasing the steering wheel) at a second portion 609 of the path 604, at which point the controller 618 can return to operating the vehicle to the requested path 604.

In some aspects, the controller 618 can reset the I-part parameter value (or accumulation parameter value) to zero on a straight road (or a nearly straight road), for example instead of freezing the value of the integral control engine 106. In such aspects, on straight roads, the controller 618 can determine not to freeze the value of the integral control engine 106. For instance, a driver of the vehicle 602 may want to drive off of the requested path 604 more to the right or left, such as to bypass the obstacle 606. The determination of whether to reset, freeze, or not freeze the I-part value can be based at least in part on how straight the road is at the time of the driver intervention, how straight the road is right in front of the vehicle when the driver intervention occurs, based on a lateral acceleration which is indicative of a curvature of the road (e.g., whether the road is straight or curved), any combination thereof, and/or other factors. In one illustrative example, the controller 618 can determine to reset the I-part value of the integral control engine 106 based on a lateral acceleration of the vehicle 602. For instance, the controller 618 can determine to reset the I-part value of the integral control engine 106 for lateral accelerations smaller than a lateral acceleration threshold (e.g., less than or equal to $0.7 m/s^2$ or other suitable lateral acceleration threshold).

In FIG. 6, a path of the vehicle 602 based on the driver interaction can be represented by line 608. While the road illustrated in FIG. 6 is shown as a right curve, the techniques described with respect to FIG. 6 can apply to any curvature. After the driver interaction (e.g., occurring at the first portion 607 deviating off of the path 604), the I-part parameter in the integral control engine 106 can be reset to zero to enable the controller 618 to smoothly transition back to the requested path 604 (e.g., via second portion 609). The part of the vehicle path 604 representing the controller 618 taking back over is shown as line 610. An advantage to this approach is that the controller 618 is faster in some situations to start from zero instead of starting with the wrong sign for the offset value. In the example shown in scenario 600, right before the driver interaction (e.g., at the first potion 607), the controller 618 could have been configured to move the vehicle in another direction (e.g., to the left) than the driver interaction, thus having the value freeze in the wrong direction.

With respect to FIG. 6, an example apparatus can manage automated driving of a vehicle. The apparatus can include or can be the controller 618 including an integral control engine (e.g., the integral control engine 106). The controller 618 can automatically control the vehicle along the requested path 604. The apparatus can receive data regarding one or more of a motion of the vehicle 602 and a driver interaction with the vehicle 602 to avoid an obstacle 606 and perform, based on the data and with respect to the integral control engine 106 of the controller 618, a resetting of a parameter associated with the integral control engine 106 to zero after the driver interaction. The controller 618 may also receive further data related to how straight a road is associated with the intended path of the controller 618 and reset the parameter further based on whether the road is straight or nearly straight. A determination of whether the road is straight or nearly straight can in one example be when a lateral acceleration is small than a threshold such as, for example, whether it is less than or equal to $0.7 m/s^2$.

The aspects discussed above with respect to FIG. 6 can be performed independently or in combination with any of the concepts discussed herein, such as those described with respect to FIGs. 3, 4, and 5 above and/or the aspects described below.

In some aspects of the present disclosure, an intelligent lateral control algorithm or lateral control engine 208 as shown in FIG. 2 can resume after the driver intervention or a reset. The lateral control engine 208 has some values or parameters that contain a history of the offset values. One of these values is the I-part parameter of the integral control engine of the controller (e.g., the controller 101, the controller 118, or other controller described herein that includes an integral control engine). Reference will be made to the controller 118 for illustrative purposes, but the aspects described herein also relate to other controllers described herein.

There are several situations or events after which the controller 118 may determine not to continue to use this history and may reassess the situation or event and/or start with more suitable "substitute" values for the I-part (also referred to as an updated accumulation parameter). Such situations or event can include, but are not limited to: (1) initialization of a lateral controller (e.g., the controller 118) after a start or resumption of a function or feature associated with the vehicle (e.g., traffic assist, lane keep assist (LKA), etc.); (2) manual interaction or intervention with the vehicle (e.g., a temporary driver intervention by steering or other intervention); (3) a manual lane change by the driver while the controller 118 is active; (4) a change in function or feature (e.g., a change in controller 118) associated with the vehicle (e.g., change between following a lane center, a trajectory for a lane following, a trajectory for a lane change, a trajectory for a lane keeping aid in which the lane keeping aid steps in to assist the controller 118 and the trajectory changes, etc.); (5) an update in a trajectory corresponding to at least one function or feature associated with the vehicle (e.g., a trajectory update within a particular feature, such as traffic assist, LKA, etc.); (6) a change of at least one setting of at least one function or feature associated with the vehicle (e.g., a change by a driver via a human-machine interface changing a lateral control setting); (7) a change in a sign associated with the error or local offset (e.g., lateral offset) relative to the setpoint value of at least one parameter such as a trajectory along a pre-determined path (e.g., a sign change of the error or lateral offset with respect to a trajectory); (8) a change of one or more characteristics of the at least one parameter (e.g., a change of one or more relevant characteristics of a pre-determined path, such as a curviness of a road), any combination thereof, and/or other situations or events. These scenarios can be mixed with any other scenario set forth in this disclosure to make decisions by the controller 118 regarding how to manage the I-part. In the scenarios outlined above, the system may keep the I-part, reset it, or may perform an operation of recalculating the I-part to generate a "substitute" value that is then used going forward by the controller 118.

The substitute value of the I-part (or updated accumulation parameter) can be calculated based on one or more of the following information or values: (1) a local offset (e.g., a lateral offset) with respect to the trajectory; (2) a lateral velocity (e.g., an absolute lateral velocity) of the vehicle or with respect to the trajectory; (3) a lateral acceleration (e.g., an absolute lateral acceleration) of the vehicle or with respect to the trajectory; (4) a curvature of the lane, trajectory, or currently driven path (e.g., a curvature of a trajectory of the vehicle, a curvature of a path in which the vehicle is located or traveling, etc.); (5) a heading with respect to a trajectory of the vehicle; (6) a heading with respect to the lane in which the vehicle is located or traveling; (7) a yaw rate of the vehicle; (8) a longitudinal velocity of the vehicle; (9) a steering torque applied by the driver; (10) a steering torque applied by the feature; (11) a steering angle (e.g., pinion angle or wheel angle); (12) map information about the road; (13) situation or event information (e.g., a lane change by the driver, the driver overtaking an object, a feature change, a trajectory update and a new initialization); (14) a setting of the controller 118 which may or may not be changed by the driver, any combination thereof, and/or other information or values. In the typical scenario, the driver takes over steering for a brief period of time and the controller 118 will take one or more of the scenarios above, and in one aspect can further utilize any other data disclosed herein as well, to calculate the substitute value of the I-part when the controller 118 takes back over control of the vehicle from the driver. For example, a current local offset (e.g., lateral offset) and/or a current lateral velocity when the controller 118 is to take back over can be utilized to calculate a substitute I-part value to use when the controller 118 takes back over.

Additionally or alternatively, in some aspects of the present disclosure, the controller 118 may take into account conditions related to when the controller will forget or remove history based on various factors. The controller 118 has some variables that contain a history. One of these variables is the I-part related to the integral control engine 106 of the controller 118. There are several situations or events during and after which this history may not be used as it is, but one or more of the current or older values should be forgotten or reduced (or ramped down). Examples of such situations or events which can cause the controller 118 to forget the I-part value or ramp down the I-part value can include, but are not limited to, one or more of: (1) manual interaction or intervention with the vehicle (e.g., a temporary driver intervention by steering or other intervention); (2) a manual lane change by the driver; (3) a change in function or feature (e.g., a change in controller 118) associated with the vehicle (e.g., change between following a lane center, a trajectory for a lane following, a trajectory for a lane change, a trajectory for a lane keeping aid in which the lane keeping aid steps in to assist the controller 118 and the trajectory changes, etc.); (4) an update in a trajectory corresponding to at least one function or feature associated with the vehicle (e.g., a trajectory update within a particular feature, such as traffic assist, LKA, etc.); (5) a change of at least one setting of at least one function or feature associated with the vehicle (e.g., a change by a driver via a human-machine interface changing a lateral control setting); (6) a change in a sign associated with the error or local offset (e.g., lateral offset) relative to the setpoint value of at least one parameter such as a trajectory along a pre-determined path (e.g., a sign change of the error or local offset (e.g., lateral offset) with respect to a trajectory); (7) a change of one or more characteristics of the at least one parameter (e.g., a change of one or more relevant characteristics of a pre-determined path, such as a curviness of a road), any combination thereof, and/or other situations or events.

During and after these situations/events, the value of the I-part parameter can be multiplied by a reduction factor (also referred to herein as a forgetting factor) to reduce or ramp down the accumulation value of I-part parameter (e.g., before a new value for the I-part parameter is added). The reduction factor (or forgetting factor) can be set to any suitable value, such as zero (which would reset the value) or a value greater than zero (e.g., 0.4, 0.5, 0.6, etc.). In one example, the reduction factor may be a number less than 1 such as, for example, 0.7, 0.8, 0.9, or other value. In some cases, using such a reduction or forgetting factor can ensure that the history of the variables is gradually ramped down. In some aspects, the reduction factor can vary, depending on the situation or event. For instance, the reduction factor can be a variable value that can be set based on a particular situation or event.

The reduction (or forgetting) factor can control a time period (or how long) for which the ramping down of the I-part value or accumulation parameter will occur. In some cases, the reduction (or forgetting) factor may depend on various factors, such as one or more of the following: (1) an expiry of a timer since begin or end of the situation or event (e.g.,

different timer values depending on the event); (2) an end of the situation or event that triggered it; (3) a goal is reached (e.g., a lateral velocity, a local offset (e.g., lateral offset), a steering angle (e.g., pinion angle, steering torque angle, etc.) or I-part changes sign or a value reaches x % of its initial value, etc.); any combination thereof, and/or other factors. In some cases, while the discussion above is with respect to a reduce, decrease, or ramping down of the I-part value, the I-part value may be increased or ramped up based on any of the factors, situations, or events herein.

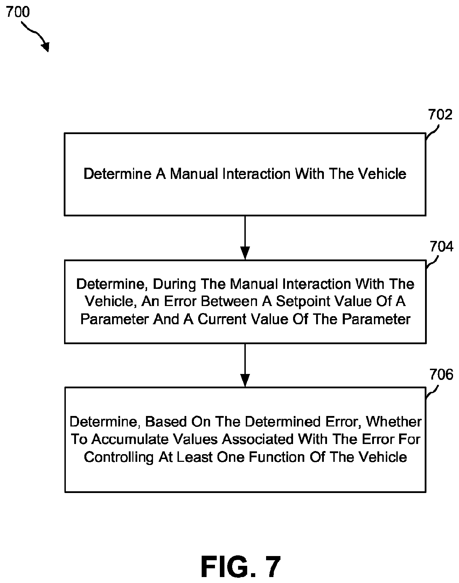

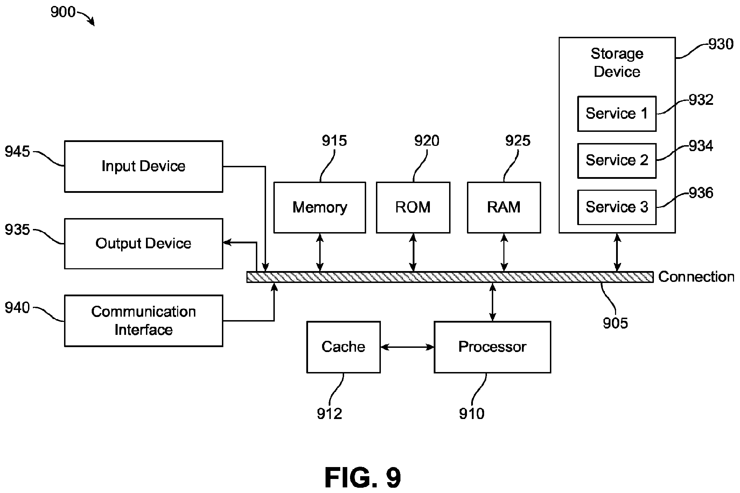

FIG. 7 is a flow diagram illustrating an example of a process 700 for controlling one or more operations of a vehicle according to one or more aspects described herein. According to aspects described herein, the process 700 may be performed by a controller of the vehicle (e.g., a lateral controller of the vehicle), such as controller 101 of FIG. 1A, the controller 118 of FIG. 1B, or the controller 131 of FIG. 1C, the controller 318 of FIG. 3, or other controller described herein. In one illustrative example, the controller 118 of FIG. 1B may utilize the I-part controller 108 to perform one or more operations of the process 700. In some cases, the operations of the process 700 can be implemented by a system having the architecture of computing system 900 of FIG. 9.

At block 702, the process 700 includes determining a manual interaction with the vehicle. In one illustrative example, the process 700 can determine there is a manual interaction with the vehicle based on input associated with a driver interaction with a steering wheel of the vehicle.

At block 704, the process 700 includes determining, during the manual interaction with the vehicle, an error between a setpoint value of a parameter and a current value of the parameter. In one illustrative example, the parameter includes a position associated with a pre-determined path for the vehicle.

At block 706, the process 700 includes determining, based on the determined error, whether to accumulate values associated with the error for controlling at least one function of the vehicle. In some examples, the vehicle may include an integral control engine (e.g., the integral control engine 106 of FIG 1A, the integral control engine 106 of FIG 1B, the integral control engine 106 of FIG 1C, or other integral control engine) configured to accumulate the values associated with the error. In some cases, the process 700 can include outputting at least one configuration request for controlling the at least one function of the vehicle based on accumulation of the error. In one illustrative example, the at least one configuration request includes a steering request for controlling a direction of the vehicle along a pre-determined path. In some cases, the steering request includes a pinion angle request, a steering torque request, or other type of steering request for controlling a direction in which the vehicle travels. The steering request may be used by a vehicle control engine (e.g., vehicle control engine 114) to autonomously control the vehicle, such as along the pre-determined path in the direction based on the steering request.

In some cases, a lateral controller may control a vehicle to keep a path which lies in the middle of a lane. The lateral controller may try to keep the vehicle on this path in all conditions including curves. In some cases, there may be a desire to have a different behavior to have an offset with respect to the middle of the lane while driving to a curve. In some cases, the vehicle may go through the curve with an out-in-out approach.

In some cases, the lateral controller may detect the vehicle is driving in a curve and in such a case the lateral controller may zero the I part of the PID controller.

By zeroing the I part of the PID controller it is expected that there is a late(r) response by the controller on curve entry. This may lead to an increased offset from the path at curve entry. Within the curve, the offset to the path is lowered by the remaining P and D part of the controller. There, the vehicle will closely follow the path. At curve exit the offset will increase again due to the late(r) response by the controller. This will lead to the requested out-in-out approach.

Zeroing the I part may, however, have a negative effect on driving on a straight road, because the controller will not be able to minimize the error enough. This may lead to unwanted oscillations. Therefore, the zeroing of the I part may be combined with logic which detects that the vehicle is in a curve by comparing the measured curvature against a certain curvature threshold.

In some aspects, the process 700 may include determining a first difference between a value associated with the error and the setpoint value of the parameter is less than a second difference between a prior value associated with the error and the setpoint value. The process 700 may include determining to accumulate the values associated with the error based on the first difference being less than the second difference. In some cases, the process 700 may include determining a third difference between a subsequent value associated with the error and the setpoint value of the parameter is greater than fourth difference between at least one prior value associated with the error and the setpoint value. The process 700 may include determining to stop accumulation of the values associated with the error based on the third difference being greater than the fourth difference.

In some aspects, the process 700 may include determining a first difference between a value associated with the error and the setpoint value of the parameter is greater than a second difference between a prior value associated with the error and the setpoint value. The process 700 may include determining to stop accumulation of the values associated with the error based on the first difference being greater than the second difference. In some cases, the process 700 may include determining a third difference between a subsequent value associated with the error and the setpoint value of the parameter is less than a fourth difference between at least one prior value associated with the error and the setpoint value. The process 700 may include determining to accumulate the values associated with the error based on the third difference being less than the fourth difference.

In some aspects, the process 700 may include determining a change in a sign associated with the error relative to a sign associated with an integral control engine configured to accumulate the values associated with the error. The process 700 may include determining to accumulate the values associated with the error based on the change in the sign associated with the error. In some cases, the change in the sign associated with the error is indicative of a change in direction of the vehicle relative to the setpoint value. In some aspects, the process 700 may include determining a sign of a value associated with the error matches the sign associated with the integral control engine. The process 700 may include determining to stop accumulation of the values associated with the error based on the value associated with the error matching the sign associated with the integral control engine.

In some cases, the process 700 may include reducing, based on the change in the sign associated with the error, an accumulation parameter associated with accumulation of the values associated with the error. In some examples, to reduce the accumulation parameter based on the change in the sign associated with the error, the process 700 may include initiating a timer based on the change in the sign associated with the error and reducing the accumulation parameter according to the timer. In some aspects, the process 700 may include reducing the accumulation parameter according at a reduction rate. For instance, the reduction rate may be based at least in part on a magnitude of the accumulation parameter when the timer is initiating.

In some aspects, the process 700 may include determining a sign of a value associated with the error matches a sign associated with an integral control engine configured to accumulate the values associated with the error. The process 700 may include determining to stop accumulation of the values associated with the error based on the value associated with the error matching the sign associated with the integral control engine. In some cases, the value associated with the error matching the sign associated with the integral control engine is indicative of a direction of the vehicle being maintained relative to the setpoint value. In some examples, the process 700 may include determining a change in a sign associated with the error relative to the sign associated with the integral control engine. The process 700 may include determining to accumulate the values associated with the error based on the change in the sign associated with the error.

In some aspects, an accumulation parameter associated with accumulation of the values associated with the error is limited based on one or more factors as described herein, such as based on a time of intervention, a road curvature, a steering wheel angle, a steering request, a steering impulse, a local offset, a yaw rate, data of a surrounding of the vehicle, map data, a heading of the vehicle, a feature steer torque, a driver steer torque, a lateral acceleration, any combination thereof, and/or other factors.

In some cases, the process 700 may include determining whether to reset an accumulation parameter associated with accumulation of the values associated with the error based on a lateral acceleration of the vehicle. In some examples, the process 700 may include resetting the accumulation parameter based on the lateral acceleration of the vehicle being less than a threshold lateral acceleration.

In some aspects, the process 700 may include determining an updated accumulation parameter for an integral control engine configured to accumulate the values associated with the error. In some cases, as described herein, the process 700 may include determining the updated accumulation parameter based on detection of an initialization of a lateral controller after a start or resumption of a function associated with the vehicle, the manual interaction with the vehicle, a change in function associated with the vehicle, an update in a trajectory corresponding to at least one function associated with the vehicle, a change in at least one setting of the at least one function associated with the vehicle, a change in a sign associated with the error relative to the setpoint value of the parameter, a change of one or more characteristics of the parameter, any combination thereof, and/or other events.

In some examples, the process 700 may include determining the updated accumulation parameter based on a lateral offset with respect to a trajectory of the vehicle, an absolute lateral velocity of the vehicle, a lateral velocity with respect to the trajectory of the vehicle, an absolute lateral acceleration of the vehicle, a lateral acceleration with respect to the trajectory of the vehicle, a curvature of a lane in which the vehicle is located, a curvature of a trajectory of the vehicle, a curvature of a path in which the vehicle is traveling, a heading with respect to the trajectory of the vehicle, a heading with respect to the lane in which the vehicle is located, a yaw rate of the vehicle, a longitudinal velocity of the vehicle, a steering torque applied by a driver of the vehicle, a steering torque applied by a control system, a steering request, a wheel angle, map information associate with a road on which the vehicle is located, a setting of a controller of the vehicle, information associated with a lane change of the vehicle, information associated with the vehicle overtaking an object on the road, information associated with to a change in function associated with the vehicle, an update in a trajectory of the vehicle, a new initialization of the controller of the vehicle, any combination thereof, and/or other event or information.

In some aspects, to determine the updated accumulation parameter, the process 700 may include reducing an accumulation parameter for the integral control engine based on a reduction factor. In some cases, the process 700 may include reducing the accumulation parameter based on the reduction factor based on detection of the manual interaction with the vehicle, a change in function associated with the vehicle, an update in a trajectory corresponding to at least one function associated with the vehicle, a change in at least one setting of the at least one function associated with the vehicle, a change in a sign associated with the error relative to the setpoint value of the parameter, a change of one or more characteristics of the parameter, and/or other event or information. In some examples, the reduction factor is based on an expiration of a time since a beginning or an ending of an event that triggered reduction of the accumulation parameter, and/or other event or information.

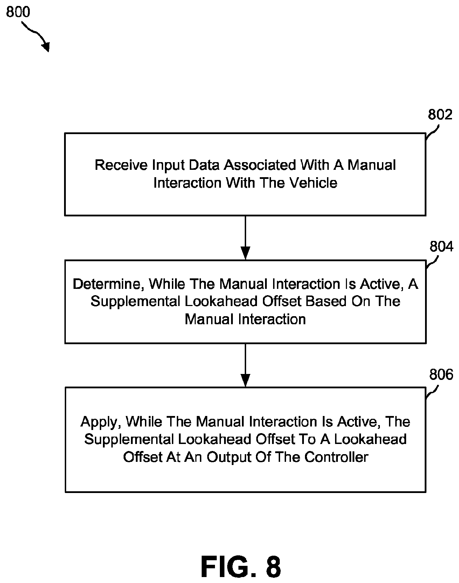

FIG. 8 is a flow diagram illustrating another example of a process 800 for controlling one or more operations of a vehicle according to one or more aspects described herein. According to aspects described herein, the process 700 may be performed by a controller of the vehicle (e.g., a lateral controller of the vehicle), such as controller 101 of FIG. 1A, the controller 118 of FIG. 1B, or the controller 131 of FIG. 1C, the controller 318 of FIG. 3, or other controller described herein. In one illustrative example, the controller 131 of FIG. 1C may utilize the lookahead engine (LAE) 140 to perform one or more operations of the process 800.

At block 802, the process 800 includes receiving input data associated with a manual interaction with the vehicle. In one illustrative example, the process 800 may include determining the manual interaction with the vehicle based on input associated with a driver interaction with a steering wheel of the vehicle.

At block 804, the process 800 includes determining, while the manual interaction is active, a supplemental lookahead offset based on the manual interaction. At block 806, the process 800 includes applying, while the manual interaction is active, the supplemental lookahead offset to a lookahead offset at an output of a controller configured to control at least one function of the vehicle. In some aspects, the process 800 may include using a filter and/or a vehicle model with knowledge of a speed of the vehicle to determine the supplemental lookahead offset.

In some aspects, the process 800 may include determining the manual interaction is no longer active and resetting, based on the manual interaction no longer being active, the lookahead offset to zero. In some aspects, the process 800 may include gradually resetting the lookahead offset to zero over a period of time. In some cases, the process 800 may include resetting the supplemental lookahead offset to zero over the period of time until an original lookahead offset value is achieved.

The controller is configured to control the at least one function of the vehicle based on applying the supplemental lookahead offset to the lookahead offset. In some cases, the controller is further configured to control the at least one function of the vehicle based on a steering request for controlling a direction of the vehicle along a pre-determined path. In some cases, the steering request includes a pinion angle request, a steering torque request, or other type of steering request for controlling a direction in which the vehicle travels. The steering request may be used by a vehicle control engine (e.g., vehicle control engine 114) to autonomously control the vehicle, such as along the pre-determined path in the direction based on the steering request.

FIG. 9 is a diagram illustrating an example of a system for implementing certain aspects of the present technology. In particular, FIG. 9 illustrates an example of computing system 900, which may be for example any computing device making up internal computing system, a remote computing system, a camera, or any component thereof in which the components of the system are in communication with each other using connection 905. Connection 905 may be a physical connection using a bus, or a direct connection into processor 910, such as in a chipset architecture. Connection 905 may also be a virtual connection, networked connection, or logical connection.

In some aspects, computing system 900 is a distributed system in which the functions described in this disclosure may be distributed within a datacenter, multiple data centers, a peer network, etc. In some aspects, one or more of the described system components represents many such components each performing some or all of the function for which the component is described. In some aspects, the components may be physical or virtual devices.

Example system 900 includes at least one processing unit (CPU or processor) 910 and connection 905 that communicatively couples various system components including system memory 915, such as read-only memory (ROM) 920 and random access memory (RAM) 925 to processor 910. Computing system 900 may include a cache 912 of high-speed memory connected directly with, in close proximity to, or integrated as part of processor 910.

Processor 910 may include any general purpose processor and a hardware service or software service, such as services 932, 934, and 936 stored in storage device 930, configured to control processor 910 as well as a special-purpose processor where software instructions are incorporated into the actual processor design. Processor 910 may essentially be a completely self-contained computing system, containing multiple cores or processors, a bus, memory controller, cache, etc. A multi-core processor may be symmetric or asymmetric.

To enable user interaction, computing system 900 includes an input device 945, which may represent any number of input mechanisms, such as a microphone for speech, a touch-sensitive screen for gesture or graphical input, keyboard, mouse, motion input, speech, etc. Computing system 900 may also include output device 935, which may be one or more of a number of output mechanisms. In some instances, multimodal systems may enable a user to provide multiple types of input/output to communicate with computing system 900.

Computing system 900 may include communications interface 940, which may generally govern and manage the user input and system output. The communication interface may perform or facilitate receipt and/or transmission wired or wireless communications using wired and/or wireless transceivers, including those making use of an audio jack/plug, a microphone jack/plug, a universal serial bus (USB) port/plug, an Apple™ Lightning™ port/plug, an Ethernet port/plug, a fiber optic port/plug, a proprietary wired port/plug, 3G, 4G, 5G and/or other cellular data network wireless signal transfer, a Bluetooth™ wireless signal transfer, a Bluetooth™ low energy (BLE) wireless signal transfer, an IBEACON™ wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 940 may also include one or more Global Navigation Satellite System (GNSS) receivers or transceivers that are used to determine a location of the computing system 900 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 930 may be a non-volatile and/or non-transitory and/or computer-readable memory device and may be a hard disk or other types of computer readable media which may store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick® card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (e.g., Level 1 (L1) cache, Level 2 (L2) cache, Level 3 (L3) cache, Level 4 (L4) cache, Level 5 (L5) cache, or other (L#) cache), resistive random-access memory (RRAM/ReRAM), phase change memory (PCM), spin transfer torque RAM (STT-RAM), another memory chip or cartridge, and/or a combination thereof.

The storage device 930 may include software services, servers, services, etc., that when the code that defines such software is executed by the processor 910, it causes the system to perform a function. In some aspects, a hardware service that performs a particular function may include the software component stored in a computer-readable medium in connection with the necessary hardware components, such as processor 910, connection 905, output device 935, etc., to carry out the function. The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data may be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

Specific details are provided in the description above to provide a thorough understanding of the aspects and examples provided herein, but those skilled in the art will recognize that the application is not limited thereto. Thus, while illustrative aspects of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, aspects may be utilized in any number of environments and applications beyond those described herein without departing from the broader scope of the specification. The specification and drawings are, accordingly, to be regarded as illustrative rather than restrictive. For the purposes of illustration, methods were described in a particular order. It should be appreciated that in alternate aspects, the methods may be performed in a different order than that described.

For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the aspects in unnecessary detail. In other instances, well-known circuits, processes, algorithms, structures, and techniques may be shown without unnecessary detail in order to avoid obscuring the aspects.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Individual aspects may be described above as a process or method which is depicted as a flowchart, a flow diagram, a data flow diagram, a structure diagram, or a block diagram. Although a flowchart may describe the operations as a sequential process, many of the operations may be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination may correspond to a return of the function to the calling function or the main function.

Processes and methods according to the above-described examples may be implemented using computer-executable instructions that are stored or otherwise available from computer-readable media. Such instructions may include, for example, instructions and data which cause or otherwise configure a general purpose computer, special purpose computer, or a processing device to perform a certain function or group of functions. Portions of computer resources used may be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

In some aspects the computer-readable storage devices, mediums, and memories may include a cable or wireless signal containing a bitstream and the like. However, when mentioned, non-transitory computer-readable storage media expressly exclude media such as energy, carrier signals, electromagnetic waves, and signals per se.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof, in some cases depending in part on the particular application, in part on the desired design, in part on the corresponding technology, etc.

The various illustrative logical blocks, modules, and circuits described in connection with the aspects disclosed herein may be implemented or performed using hardware, software, firmware, middleware, microcode, hardware description languages, or any combination thereof, and may take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Examples of form factors include laptops, smart phones, mobile phones, tablet devices or other small form factor personal computers, personal digital assistants, rackmount devices, standalone devices, and so on. Functionality described herein also may be embodied in peripherals or add-in cards. Such functionality may also be implemented on a circuit board among different chips or different processes executing in a single device, by way of further example.

The instructions, media for conveying such instructions, computing resources for executing them, and other structures for supporting such computing resources are example means for providing the functions described in the disclosure.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods, algorithms, and/or operations described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that may be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general-purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

One of ordinary skill will appreciate that the less than ("<") and greater than (">") symbols or terminology used herein may be replaced with less than or equal to ("≤") and greater than or equal to ("≥") symbols, respectively, without departing from the scope of this description.

Where components are described as being "configured to" perform certain operations, such configuration may be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" or "communicatively coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, A and B and C, or any duplicate information or data (e.g., A and A, B and B, C and C, A and A and B, and so on), or any other ordering, duplication, or combination of A, B, and C. The language "at least one of" a set and/or "one or more" of a set does not limit the set to the items listed in the set. For example, claim language reciting "at least one of A and B" or "at least one of A or B" may mean A, B, or A and B, and may additionally include items not listed in the set of A and B.

Claim language or other language reciting "at least one processor configured to," "at least one processor being configured to," or the like indicates that one processor or multiple processors (in any combination) can perform the associated operation(s). For example, claim language reciting "at least one processor configured to: X, Y, and Z" means a single processor can be used to perform operations X, Y, and Z; or that multiple processors are each tasked with a certain subset of operations X, Y, and Z such that together the multiple processors perform X, Y, and Z; or that a group of multiple processors work together to perform operations X, Y, and Z. In another example, claim language reciting "at least one processor configured to: X, Y, and Z" can mean that any single processor may only perform at least a subset of operations X, Y, and Z.

Illustrative Aspects of the disclosure include:

Aspect 1. An apparatus for controlling one or more operations of a vehicle, comprising: at least one memory; and at least one processor coupled to the at least one memory, the at least one processor configured to: determine a manual interaction with the vehicle; determine, during the manual interaction with the vehicle, an error between a setpoint value of a parameter and a current value of the parameter; and determine, based on the determined error, whether to accumulate values associated with the error for controlling at least one function of the vehicle.

Aspect 2. The apparatus of Aspect 1, wherein the at least one processor is configured to determine the manual interaction with the vehicle based on input associated with a driver interaction with a steering wheel of the vehicle.

Aspect 3. The apparatus of any of Aspects 1 to 2, wherein the parameter includes a position associated with a pre-determined path for the vehicle.

Aspect 4. The apparatus of any of Aspects 1 to 3, wherein the at least one processor is configured to: output at least one configuration request for controlling the at least one function of the vehicle based on accumulation of the error.

Aspect 5. The apparatus of Aspect 4, wherein the at least one configuration request includes a steering request for controlling a direction of the vehicle along a pre-determined path.

Aspect 6. The apparatus of any of Aspects 1 to 5, further comprising an integral control engine configured to accumulate the values associated with the error.

Aspect 7. The apparatus of any of Aspects 1 to 6, wherein the at least one processor is configured to: determine a first difference between a value associated with the error and the setpoint value of the parameter is less than a second difference between a prior value associated with the error and the setpoint value; and determine to accumulate the values associated with the error based on the first difference being less than the second difference.

Aspect 8. The apparatus of Aspect 7, wherein the at least one processor is configured to: determine a third difference between a subsequent value associated with the error and the setpoint value of the parameter is greater than fourth difference between at least one prior value associated with the error and the setpoint value; and determine to stop accumulation of the values associated with the error based on the third difference being greater than the fourth difference.

Aspect 9. The apparatus of any of Aspects 1 to 8, wherein the at least one processor is configured to: determine a first difference between a value associated with the error and the setpoint value of the parameter is greater than a second difference between a prior value associated with the error and the setpoint value; and determine to stop accumulation of the values associated with the error based on the first difference being greater than the second difference.

Aspect 10. The apparatus of Aspect 9, wherein the at least one processor is configured to: determine a third difference between a subsequent value associated with the error and the setpoint value of the parameter is less than a fourth difference between at least one prior value associated with the error and the setpoint value; and determine to accumulate the values associated with the error based on the third difference being less than the fourth difference.

Aspect 11. The apparatus of any of Aspects 1 to 10, wherein the at least one processor is configured to: determine a change in a sign associated with the error relative to a sign associated with an integral control engine configured to accumulate the values associated with the error; and determine to accumulate the values associated with the error based on the change in the sign associated with the error.

Aspect 12. The apparatus of Aspect 11, wherein the change in the sign associated with the error is indicative of a change in direction of the vehicle relative to the setpoint value.

Aspect 13. The apparatus of any of Aspects 111 or 12, wherein the at least one processor is configured to: determine a sign of a value associated with the error matches the sign associated with the integral control engine; and determine to stop accumulation of the values associated with the error based on the value associated with the error matching the sign associated with the integral control engine.

Aspect 14. The apparatus of any of Aspects 11 to 13, wherein the at least one processor is configured to: reducing, based on the change in the sign associated with the error, an accumulation parameter associated with accumulation of the values associated with the error.

Aspect 15. The apparatus of Aspect 14, wherein, to reduce the accumulation parameter based on the change in the sign associated with the error, the at least one processor is configured to: initiate a timer based on the change in the sign associated with the error; and reduce the accumulation parameter according to the timer.

Aspect 16. The apparatus of any of Aspects 14 or 15, wherein the at least one processor is configured to reduce the accumulation parameter according at a reduction rate, the reduction rate being based at least in part on a magnitude of the accumulation parameter when the timer is initiating.

Aspect 17. The apparatus of any of Aspects 1 to 16, wherein the at least one processor is configured to: determine a sign of a value associated with the error matches a sign associated with an integral control engine configured to accumulate the values associated with the error; and determine to stop accumulation of the values associated with the error based on the value associated with the error matching the sign associated with the integral control engine.

Aspect 18. The apparatus of Aspect 17, wherein the value associated with the error matching the sign associated with the integral control engine is indicative of a direction of the vehicle being maintained relative to the setpoint value.

Aspect 19. The apparatus of any of Aspects 17 or 18, wherein the at least one processor is configured to: determine a change in a sign associated with the error relative to the sign associated with the integral control engine; and determine to accumulate the values associated with the error based on the change in the sign associated with the error.

Aspect 20. The apparatus of any of Aspects 1 to 19, wherein an accumulation parameter associated with accumulation of the values associated with the error is limited based on at least one of a time of intervention, a road curvature, a steering wheel angle, a steering request, a steering impulse, a local offset, a yaw rate, data of a surrounding of the vehicle, map data, a heading of the vehicle, a feature steer torque, a driver steer torque, or a lateral acceleration.

Aspect 21. The apparatus of any of Aspects 1 to 20, wherein the at least one processor is configured to: determine whether to reset an accumulation parameter associated with accumulation of the values associated with the error based on a lateral acceleration of the vehicle.

Aspect 22. The apparatus of Aspect 21, wherein the at least one processor is configured to: reset the accumulation parameter based on the lateral acceleration of the vehicle being less than a threshold lateral acceleration.

Aspect 23. The apparatus of any of Aspects 1 to 22, wherein the at least one processor is configured to: determine an updated accumulation parameter for an integral control engine configured to accumulate the values associated with the error.

Aspect 24. The apparatus of Aspect 23, wherein the at least one processor is configured to determine the updated accumulation parameter based on detection of at least one of initialization of a lateral controller after a start or resumption of a function associated with the vehicle, the manual interaction with the vehicle, a change in function associated with the vehicle, an update in a trajectory corresponding to at least one function associated with the vehicle, a change in at least one setting of the at least one function associated with the vehicle, a change in a sign associated with the error relative to the setpoint value of the parameter, or a change of one or more characteristics of the parameter.

Aspect 25. The apparatus of any of Aspects 23 or 24, wherein the at least one processor is configured to determine the updated accumulation parameter based on at least one of a lateral offset with respect to a trajectory of the vehicle, an absolute lateral velocity of the vehicle, a lateral velocity with respect to the trajectory of the vehicle, an absolute lateral acceleration of the vehicle, a lateral acceleration with respect to the trajectory of the vehicle, a curvature of a lane in which the vehicle is located, a curvature of a trajectory of the vehicle, a curvature of a path in which the vehicle is traveling, a heading with respect to the trajectory of the vehicle, a heading with respect to the lane in which the vehicle is located, a yaw rate of the vehicle, a longitudinal velocity of the vehicle, a steering torque applied by a driver of the vehicle, a steering torque applied by a control system, a steering request, a wheel angle, map information associate with a road on which the vehicle is located, a setting of a controller of the vehicle, information associated with a lane change of the vehicle, information associated with the vehicle overtaking an object on the road, information associated with to a change in function associated with the vehicle, an update in a trajectory of the vehicle, or a new initialization of the controller of the vehicle.

Aspect 26. The apparatus of any of Aspects 23 to 25, wherein, to determine the updated accumulation parameter, the at least one processor is configured to reduce an accumulation parameter for the integral control engine based on a reduction factor.

Aspect 27. The apparatus of Aspect 26, wherein the at least one processor is configured to reduce the accumulation parameter based on the reduction factor based on detection of at least one of the manual interaction with the vehicle, a change in function associated with the vehicle, an update in a trajectory corresponding to at least one function associated with the vehicle, a change in at least one setting of the at least one function associated with the vehicle, a change in a sign associated with the error relative to the setpoint value of the parameter, or a change of one or more characteristics of the parameter.

Aspect 28. The apparatus of any of Aspects 26 or 27, wherein the reduction factor is based on at least one of an expiration of a time since a beginning or an ending of an event that triggered reduction of the accumulation parameter.

Aspect 29. A method of controlling one or more operations of a vehicle, the method comprising operations according to any of Aspects 1 to 28.

Aspect 30. A non-transitory computer-readable medium having stored thereon instructions that, when executed by one or more processors, cause the one or more processors to perform operations according to any of Aspects 1 to 28.

Aspect 31. An apparatus for controlling one or more operations of a vehicle, the apparatus comprising one or more means for performing operations according to any of Aspects 1 to 28.

Aspect 32. An apparatus for controlling one or more operations of a vehicle, comprising: a controller configured to control at least one function of the vehicle, wherein the controller comprises a feedforward path compensation engine; at least one memory; and at least one processor coupled to the at least one memory, the at least one processor configured to: receive input data associated with a manual interaction with the vehicle; determine, while the manual interaction is active, a supplemental lookahead offset based on the manual interaction; and apply, while the manual interaction is active, the supplemental lookahead offset to a lookahead offset at an output of the controller.

Aspect 33. The apparatus of Aspect 32, wherein the at least one processor is configured to: determine the manual interaction is no longer active; and reset, based on the manual interaction no longer being active, the lookahead offset to zero.

Aspect 34. The apparatus of Aspect 33, wherein the at least one processor is configured to gradually reset the lookahead offset to zero over a period of time.

Aspect 35. The apparatus of any of Aspects 32 to 34, wherein the at least one processor is configured to reset the supplemental lookahead offset to zero over the period of time until an original lookahead offset value is achieved.

Aspect 36. The apparatus of any of Aspects 32 to 35, wherein the at least one processor is configured to use at least one of a filter and a vehicle model with knowledge of a speed of the vehicle to determine the supplemental lookahead offset.

Aspect 37. The apparatus of any of Aspects 32 to 36, wherein the at least one processor is configured to determine the manual interaction with the vehicle based on input associated with a driver interaction with a steering wheel of the vehicle.

Aspect 38. The apparatus of Aspect 37, wherein the controller is configured to control the at least one function of the vehicle based on applying the supplemental lookahead offset to the lookahead offset.

Aspect 39. The apparatus of any of Aspects 32 to 38, wherein the controller is further configured to control the at least one function of the vehicle based on a steering request for controlling a direction of the vehicle along a pre-determined path.

Aspect 40. The apparatus of any of Aspects 32 or 39, wherein the reduction factor is based on at least one of an expiration of a time since a beginning or an ending of an event that triggered reduction of the accumulation parameter.

Aspect 41. A method of controlling one or more operations of a vehicle, the method comprising operations according to any of Aspects 32 to 40.

Aspect 42. A non-transitory computer-readable medium having stored thereon instructions that, when executed by one or more processors, cause the one or more processors to perform operations according to any of Aspects 32 to 40.

Aspect 43. An apparatus for controlling one or more operations of a vehicle, the apparatus comprising one or more means for performing operations according to any of Aspects 32 to 40.

Embodiments of the invention can be described with reference to the following numbered clauses, with preferred features laid out in the dependent clauses:

1. An apparatus for controlling one or more operations of a vehicle, comprising:

at least one memory; and
at least one processor coupled to the at least one memory, the at least one processor configured to:

determine a manual interaction with the vehicle;
determine, during the manual interaction with the vehicle, an error between a setpoint value of a parameter and a current value of the parameter; and
determine, based on the determined error, whether to accumulate values associated with the error for controlling at least one function of the vehicle.

2. The apparatus of clause 1, wherein the at least one processor is configured to determine the manual interaction with the vehicle based on input associated with a driver interaction with a steering wheel of the vehicle.

3. The apparatus of clause 1, wherein the parameter includes a position associated with a pre-determined path for the vehicle.

4. The apparatus of clause 1, wherein the at least one processor is configured to:
output at least one configuration request for controlling the at least one function of the vehicle based on accumulation of the error.

5. The apparatus of clause 4, wherein the at least one configuration request includes a steering request for controlling a direction of the vehicle along a pre-determined path.

6. The apparatus of clause 1, further comprising an integral control engine configured to accumulate the values associated with the error.

7. The apparatus of clause 1, wherein the at least one processor is configured to:

determine a first difference between a value associated with the error and the setpoint value of the parameter is less than a second difference between a prior value associated with the error and the setpoint value; and
determine to accumulate the values associated with the error based on the first difference being less than the second difference.

8. The apparatus of clause 7, wherein the at least one processor is configured to:

determine a third difference between a subsequent value associated with the error and the setpoint value of the parameter is greater than fourth difference between at least one prior value associated with the error and the setpoint value; and
determine to stop accumulation of the values associated with the error based on the third difference being greater than the fourth difference.

9. The apparatus of clause 1, wherein the at least one processor is configured to:

determine a first difference between a value associated with the error and the setpoint value of the parameter is greater than a second difference between a prior value associated with the error and the setpoint value; and
determine to stop accumulation of the values associated with the error based on the first difference being greater than the second difference.

10. The apparatus of clause 9, wherein the at least one processor is configured to:

determine a third difference between a subsequent value associated with the error and the setpoint value of the parameter is less than a fourth difference between at least one prior value associated with the error and the setpoint value; and
determine to accumulate the values associated with the error based on the third difference being less than the fourth difference.

11. The apparatus of clause 1, wherein the at least one processor is configured to:

determine a change in a sign associated with the error relative to a sign associated with an integral control engine configured to accumulate the values associated with the error; and
determine to accumulate the values associated with the error based on the change in the sign associated with the error.

12. The apparatus of clause 11, wherein the change in the sign associated with the error is indicative of a change in direction of the vehicle relative to the setpoint value.

13. The apparatus of clause 11, wherein the at least one processor is configured to:

determine a sign of a value associated with the error matches the sign associated with the integral control engine; and
determine to stop accumulation of the values associated with the error based on the value associated with the error matching the sign associated with the integral control engine.

14. The apparatus of clause 11, wherein the at least one processor is configured to:

reducing, based on the change in the sign associated with the error, an accumulation parameter associated with accumulation of the values associated with the error.

15. The apparatus of clause 14, wherein, to reduce the accumulation parameter based on the change in the sign associated with the error, the at least one processor is configured to:

initiate a timer based on the change in the sign associated with the error; and
reduce the accumulation parameter according to the timer.

16. An apparatus for controlling one or more operations of a vehicle, comprising:

a controller configured to control at least one function of the vehicle;
at least one memory; and
at least one processor coupled to the at least one memory, the at least one processor configured to:

receive input data associated with a manual interaction with the vehicle;
determine, while the manual interaction is active, a supplemental lookahead offset based on the manual interaction; and
apply, while the manual interaction is active, the supplemental lookahead offset to a lookahead offset at an output of the controller.

17. The apparatus of clause 16, wherein the at least one processor is configured to:

determine the manual interaction is no longer active; and
reset, based on the manual interaction no longer being active, the lookahead offset to zero.

18. The apparatus of clause 16, wherein the at least one processor is configured to gradually reset the lookahead offset to zero over a period of time.

19. The apparatus of clause 18, wherein the at least one processor is configured to reset the supplemental lookahead offset to zero over the period of time until an original lookahead offset value is achieved.

20. The apparatus of clause 16, wherein the at least one processor is configured to use at least one of a filter and a vehicle model with knowledge of a speed of the vehicle to determine the supplemental lookahead offset.

21. The apparatus of clause 16, wherein the at least one processor is configured to determine the manual interaction with the vehicle based on input associated with a driver interaction with a steering wheel of the vehicle.

22. The apparatus of clause 16, wherein the controller is configured to control the at least one function of the vehicle based on applying the supplemental lookahead offset to the lookahead offset.

23. The apparatus of clause 22, wherein the controller is further configured to control the at least one function of the vehicle based on a steering request for controlling a direction of the vehicle along a pre-determined path.

24. A method for controlling one or more operations of a vehicle, comprising:

determining a manual interaction with the vehicle;
determining, during the manual interaction with the vehicle, an error between a setpoint value of a parameter and a current value of the parameter; and
determining, based on the determined error, whether to accumulate values associated with the error for controlling at least one function of the vehicle.

25. The method of clause 24, further comprising determining the manual interaction with the vehicle based on input associated with a driver interaction with a steering wheel of the vehicle.

26. The method of clause 24, wherein the parameter includes a position associated with a pre-determined path for the vehicle.

27. The method of clause 24, further comprising outputting at least one configuration request for controlling the at least one function of the vehicle based on accumulation of the error.

28. The method of clause 27, wherein the at least one configuration request includes a steering request for controlling a direction of the vehicle along a pre-determined path.

29. A method for controlling one or more operations of a vehicle, comprising:

receiving input data associated with a manual interaction with the vehicle;
determining, while the manual interaction is active, a supplemental lookahead offset based on the manual interaction; and
applying, while the manual interaction is active, the supplemental lookahead offset to a lookahead offset at an output of a controller configured to control at least one function of the vehicle.

30. The method of clause 29, further comprising:

determining the manual interaction is no longer active; and
resetting, based on the manual interaction no longer being active, the lookahead offset to zero.

**Claims**

1. An apparatus (130) for controlling one or more operations of a vehicle, comprising:

a controller (114) configured to control at least one function of the vehicle;
at least one memory; and
at least one processor (140) coupled to the at least one memory, the at least one processor configured to:

receive input data associated with a manual interaction with the vehicle;
determine, while the manual interaction is active, a supplemental lookahead offset based on the manual interaction; and
apply, while the manual interaction is active, the supplemental lookahead offset to a lookahead offset at an output of the controller.

2. The apparatus of claim 1, wherein the at least one processor is configured to:

determine the manual interaction is no longer active; and
reset, based on the manual interaction no longer being active, the lookahead offset to zero.

3. The apparatus of claim 1, wherein the at least one processor is configured to gradually reset the lookahead offset to zero over a period of time.

4. The apparatus of claim 3, wherein the at least one processor is configured to reset the supplemental lookahead offset to zero over the period of time until an original lookahead offset value is achieved.

5. The apparatus of claim 1, wherein the at least one processor is configured to use at least one of a filter and a vehicle model with knowledge of a speed of the vehicle to determine the supplemental lookahead offset.

6. The apparatus of claim 1, wherein the at least one processor is configured to determine the manual interaction with the vehicle based on input associated with a driver interaction with a steering wheel of the vehicle.

7. The apparatus of claim 1, wherein the controller is configured to control the at least one function of the vehicle based on applying the supplemental lookahead offset to the lookahead offset.

8. The apparatus of claim 7, wherein the controller is further configured to control the at least one function of the vehicle based on a steering request for controlling a direction of the vehicle along a pre-determined path.

9. A method (800) for controlling one or more operations of a vehicle, comprising:

   receiving (802) input data associated with a manual interaction with the vehicle;
   determining (804), while the manual interaction is active, a supplemental lookahead offset based on the manual interaction; and
   applying (806), while the manual interaction is active, the supplemental lookahead offset to a lookahead offset at an output of a controller configured to control at least one function of the vehicle.

10. The method of claim 9, further comprising:

   determining the manual interaction is no longer active; and
   resetting, based on the manual interaction no longer being active, the lookahead offset to zero.

11. A non-transitory computer-readable medium having stored thereon instructions that, when executed by one or more processors, cause the one or more processors to perform operations according to any of claims 9 or 10.

**FIG. 1A**

**FIG. 1B**

**FIG. 1C**

200

202

204

208

210

ADAS

Functions/
Features

LatCtrl
DIL
LatAccLim

212

Lateral
request
(path)

Steering
limitations

Pinion
angle
request

206

Vehicle Control
(e.g., Steering)

# FIG. 2

**FIG. 3**

a)

b)

FIG. 4

**FIG. 5**

**FIG. 6**

700

702

Determine A Manual Interaction With The Vehicle

704

Determine, During The Manual Interaction With The Vehicle, An Error Between A Setpoint Value Of A Parameter And A Current Value Of The Parameter

706

Determine, Based On The Determined Error, Whether To Accumulate Values Associated With The Error For Controlling At Least One Function Of The Vehicle

# FIG. 7

800

802

Receive Input Data Associated With A Manual
Interaction With The Vehicle

804

Determine, While The Manual Interaction Is Active, A
Supplemental Lookahead Offset Based On The
Manual Interaction

806

Apply, While The Manual Interaction Is Active, The
Supplemental Lookahead Offset To A Lookahead
Offset At An Output Of The Controller

# FIG. 8

**FIG. 9**

Europäisches
Patentamt

European
Patent Office

Office européen
des brevets

## EUROPEAN SEARCH REPORT

**Application Number**

EP 25 19 0423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/299573 A1 (THRUN SEBASTIAN [US] ET AL) 3 December 2009 (2009-12-03) * paragraph [0023] - paragraph [0066]; figures 1-4 * | 1-11 | INV. B62D15/02 B60W30/10 |
| A | EP 2 025 577 B1 (TOYOTA MOTOR CO LTD [JP]) 2 May 2012 (2012-05-02) * paragraph [0019] - paragraph [0057]; figures 1-10 * | 1-11 | |
| A | CN 112 537 297 A (BYD CO LTD) 23 March 2021 (2021-03-23) * paragraph [0034] - paragraph [0074]; figures 1-7 * | 1-11 | |

**TECHNICAL FIELDS SEARCHED (IPC)**

B60W
B62D

The present search report has been drawn up for all claims

| Place of search | Date of completion of the search | Examiner |
|---|---|---|
| The Hague | 12 October 2025 | Signorini, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0423

This annex lists the patent family members relating to the patent documents cited in  the above-mentioned European search report.
The members are as contained in the European Patent Office EDP file on
The European Patent Office is in no way liable for these particulars which are merely given for the purpose of information.

12-10-2025

| Patent document cited in search report | Publication date | Patent family member(s) | | Publication date |
|---|---|---|---|---|
| US 2009299573 A1 | 03-12-2009 | US | 2009299573 A1 | 03-12-2009 |
| | | WO | 2009151781 A1 | 17-12-2009 |
| EP 2025577 B1 | 02-05-2012 | CN | 101460353 A | 17-06-2009 |
| | | CN | 102490784 A | 13-06-2012 |
| | | EP | 2025577 A1 | 18-02-2009 |
| | | JP | 4582052 B2 | 17-11-2010 |
| | | JP | 2007326447 A | 20-12-2007 |
| | | US | 2009171533 A1 | 02-07-2009 |
| | | WO | 2007142345 A1 | 13-12-2007 |
| CN 112537297 A | 23-03-2021 | NONE | | |

EPO FORM P0459

For more details about this annex : see Official Journal of the European Patent Office, No. 12/82